# EUROPÄISCHE PATENTSCHRIFT

(11) **EP 3 297 847 B1**
(45) Veröffentlichungstag und Bekanntmachung des Hinweises auf die Patenterteilung: **30.09.2020**
(21) Anmeldenummer: 16705453.5
(22) Anmeldetag: 04.02.2016
(51) Int. Cl.: B44B 5/00, B32B 37/00, B32B 37/14, B32B 38/06, B32B 38/00, B32B 38/18, B44C 1/24, B44C 5/04

(54) **VERFAHREN ZUR HERSTELLUNG EINES REGISTERHALTIG GEPRÄGTEN, INSBESONDERE LAMINIERTEN, MATERIALS**
METHOD FOR PRODUCING A MATERIAL, IN PARTICULAR A LAMINATED MATERIAL, WHICH IS REGISTERED EMBOSSED
PROCÉDÉ PERMETTANT DE PRODUIRE UN MATÉRIAU ESTAMPÉ EN REPÉRAGE, EN PARTICULIER STRATIFIÉ

(30) Priorität: 21.05.2015 DE 102015006393
(43) Veröffentlichungstag der Anmeldung: 28.03.2018
(73) Patentinhaber: OLBRICH GmbH, 46395 Bocholt (DE)
(72) Erfinder: LENSING, Uwe, 46419 Isselburg (DE); KLEIN-HESSLING, Herbert, 46414 Rhede (DE); TE WELSCHER, Frans, 46397 Bocholt (DE); JOSTEN, Andre, 46399 Bocholt (DE)
(74) Vertreter: Viering, Jentschura & Partner mbB Patent- und Rechtsanwälte
(86) Internationale Anmeldenummer: PCT/EP2016/052436
(87) Internationale Veröffentlichungsnummer: WO 2016/184581

(56) Entgegenhaltungen:
- EP-A1- 2 636 524
- DE-A1-102014 101 554
- GB-A- 2 036 649

## Beschreibung

Die Erfindung richtet sich auf ein Verfahren zum kontinuierlichen registerhaltigen Prägen eines mit einem sich wiederholenden Druckbild versehenen dehnbaren Films oder eines mit dem Film gebildeten Laminats in einer eine rotierende und ein Prägebild aufweisende Prägewalze und eine zugeordnete rotierende Gegenwalze umfassenden Prägestation.

Um bedruckte Materialbahnen, insbesondere Kunststofffilme, beispielsweise solche aus PVC, aus derartigen Materialbahnen oder Filmen hergestellte Laminate oder auch Tapeten mit einer möglichst realistischen und naturgetreuen Oberfläche auszustatten, ist es bekannt, die Oberfläche mit einer dem Druckbild der Materialbahn entsprechenden Prägung zu versehen. Hierbei ist es gewünscht, dass die Prägung exakt mit dem Druckbild übereinstimmt. Dies wird als sogenannte registerhaltige Prägung bezeichnet. Dabei werden ein jeweiliges, sich regelmäßig wiederholendes und eine bestimmte Druckbildlänge aufweisendes, auf die Materialbahn aufgedrucktes Druckbild und ein zugehöriges, eine Prägebildlänge aufweisendes Prägebild eines Prägewerkzeuges beim Prägevorgang in einer Prägestation in eine deckungsgleiche Übereinanderlage gebracht und wird über eine Prägelänge das Prägebild in das Druckbild geprägt. Eine solche Prägestation kann beispielsweise eine das Prägebild aufweisende rotierende Prägewalze und eine zugeordnete Gegenwalze als Prägewerkzeug umfassen. Zwischen diesen beiden Walzen wird dann der Film derart hindurchgeführt, dass eine Prägelänge des reliefartig auf der Oberfläche der Prägewalze ausgebildeten Prägebildes auf genau einer entsprechenden Druckbildlänge des Druckbildes abgerollt wird, wobei mittels der Gegenwalze der für die Ausbildung der Prägung auf dem Film notwendige Anpressdruck sichergestellt wird. Beispielsweise lässt sich auf diese Weise registergenau eine der Natur nachempfundene Holzstruktur in ein eine Holzmaserung abbildendes Druckbild einprägen.

Problematisch hierbei ist, dass aufgrund von Ungenauigkeiten beim Druck des Druckbildes oder aufgrund von Materialbeanspruchungen der bedruckten Materialbahn oder des bedruckten Filmes, beispielsweise aufgrund von Temperatureinflüssen oder von mechanischen Einflüssen, das sich über die Länge einer jeweiligen Materialbahn mehrfach wiederholende Druckbild keine konstante Druckbildlänge aufweist. Beim Prägen führt dies dazu, dass das mit einer konstanten Prägebildlänge auf der Prägewalze ausgebildete und auf der Materialbahn oder dem Film abrollende Prägebild dann nicht bei jedem Prägevorgang exakt mit seiner von der Prägebildlänge bestimmten Prägelänge mit der jeweiligen Druckbildlänge übereinstimmt, so dass beispielsweise das Druckbild einer abgebildeten Holzmaserung dann nicht mit der aufgeprägten oder eingeprägten Holzstruktur übereinstimmt.

Um auch in derartigen Fällen ein registerhaltiges Prägen zu ermöglichen, ist in der EP 2 636 524 A1 vorgeschlagen worden, den Film - und damit das darauf befindliche Druckbild - vor Erreichen der Prägestation oder bei Bildung eines Laminats vor Erreichen der Laminierstation in einem Vorwärmschritt registerhaltig auf eine der Prägebildlänge der Prägewalze entsprechende Druckbildlänge längszudehnen und danach dann dem von der das Prägebild aufweisenden Prägewalze ausgeführten Prägen zu unterwerfen. Hierbei sind die Umfangsgeschwindigkeiten von Gegenwalze und Prägewalze und damit auch die Bahngeschwindigkeit des Films oder Laminats beim eigentlichen Prägen des Films oder des Laminates in der Prägestation gleich. Diese Vorgehensweise funktioniert aber nur dann, wenn das Prägebild auf der Prägewalze und damit in der Regel der Prägewalzenumfang größer als die ursprüngliche Druckbildlänge sind. Sind das Prägebild und der Prägewalzenumfang kleiner als die ursprüngliche Druckbildlänge, kann mit einer Längsdehnung des Druckbildes eine Anpassung an die Prägebildlänge nicht erreicht werden. Es kann nämlich auch der Fall eintreten, dass bei Bildung eines Laminates die beispielsweise materialbedingt maximal mögliche Längsdehnung zunächst des Films oder des Laminats nicht ausreicht, um dadurch die Druckbildlänge an die Prägebildlänge anzupassen. D.h., dieses Verfahren funktioniert - bei einer gegebenen Prägewalze - sowohl dann nicht, wenn die gedruckte und/oder die gestreckte Druckbildlänge größer als die Prägebildlänge ist, als auch dann nicht, wenn materialbedingt die notwendige Längsdehnung des Druckbildes zur Anpassung der Druckbildlänge an die gegebene Prägebildlänge nicht möglich ist. Um in solchen Fällen dennoch ein registerhaltiges Prägen durchführen zu können, muss die Prägewalze ausgewechselt und gegen eine solche mit einer kleineren oder größeren Prägebildlänge ausgetauscht werden. Dies bedeutet, dass eine jeweilige Prägewalze in Bezug auf die mit dieser zu verarbeitende Produktvielfalt beschränkt ist und dass die Bevorratung einer Vielzahl an Prägewalzen eines Prägemotivs, die sich hinsichtlich ihres Umfanges und damit der jeweiligen Prägebildlänge unterscheiden, notwendig ist.

Ein registerhaltiges Prägen, bei welchem eine Anpassung der Prägelänge einer auf einer Prägewalze ausgebildeten Prägebildlänge an die Druckbildlänge eines zu prägenden Films oder Laminats vorgenommen wird, ist aus der EP 2 447 063 A1 bekannt. Bei diesem Verfahren erfolgt die Anpassung der durch das Prägebild und damit die Prägebildlänge bewirkten Prägelänge dadurch, dass die Prägewalze eine Relativgeschwindigkeit zu der an ihr vorbeigeführten Film- oder Laminatbahn ausführt. Aber auch bei dem aus diesem Dokument bekannten Verfahren bleiben die Anpassungsmöglichkeiten für die Anpassung der Prägelänge an die Druckbildlänge beschränkt. Da das Druckbild ohne vorhergehende Bearbeitung der die Prägewalze aufweisenden Prägestation zugeführt wird, besteht die einzige Anpassungsmöglichkeit darin, dass die Umfangsgeschwindigkeit der Prägewalze zur Anpassung der Prägelänge an die Druckbildlänge verändert wird. Zwar ist es mit diesem Verfahren möglich, eine Anpassung der Prägelänge sowohl an eine gegenüber der eigentlichen Prägebildlänge längere als auch kürzere Druckbildlänge vorzunehmen, das Anpassungsspektrum bezüglich angleichbarer Längenunterschiede bleibt aber weiterhin beschränkt, da der Längenbereich, der durch eine Relativgeschwindigkeit zwischen der Bahngeschwindigkeit des Films oder des Laminats und der Umfangsgeschwindigkeit der Prägewalze ausgeglichen werden kann, nicht sehr groß ausfällt, wenn weiterhin ein registerhaltiges Prägen sichergestellt werden muss.

Sowohl aus der DE 10 2014 101 554 A1 als auch der GB 2 036 649 A ist jeweils ein Verfahren zum kontinuierlichen registerhaltigen Prägen eines mit einem dehnbaren Film gebildeten Laminats bekannt, wobei der dehnbare Film mit einem sich wiederholenden Druckbild versehen ist und in einer eine rotierende und ein Prägebild aufweisenden Prägewalze sowie eine zugeordnete rotierende Gegenwalze umfassenden Prägestation registerhaltig geprägt wird. Während des registerhaltigen Prägens wird zwischen der Prägewalze und der Gegenwalze für das dazwischen hindurchgeführte Laminat durch Anpressen der Gegenwalze an die Prägewalze ein das Laminat erfassender Festpunkt gebildet.

Der Erfindung liegt daher die Aufgabe zugrunde, eine Lösung zu schaffen, die das Verarbeiten einer größeren Bandbreite an Druckbildlängen bei einem kontinuierlichen registerhaltigen Prägen mittels einer Prägewalze ermöglicht.

Erfindungsgemäß wird diese Aufgabe gelöst durch ein Verfahren gemäß Anspruch 1.

Vorteilhafte Ausgestaltungen und zweckmäßige Weiterbildungen der Erfindung sind Gegenstand der jeweiligen Unteransprüche.

Erreicht wird dies also durch ein Verfahren zum kontinuierlichen registerhaltigen Prägen eines mit einem sich wiederholenden Druckbild versehenen dehnbaren Films oder eines mit dem Film gebildeten Laminats in einer eine rotierende und ein Prägebild aufweisende Prägewalze und eine zugeordnete rotierende Gegenwalze umfassenden Prägestation, wobei die Druckbildlänge des Films oder Laminats vor dem prägenden Kontakt mit der Prägewalze auf eine Länge größer oder größer gleich oder kleiner oder kleiner gleich der Prägebildlänge oder des Umfangs der Prägewalze längsgedehnt wird und die Registerhaltigkeit des Prägens durch eine eine, insbesondere gegebenenfalls, bestehende Längendifferenz zwischen dem längsgedehnten Druckbild und dem Prägebild der Prägewalze korrigierend ausgleichende Relativgeschwindigkeit zwischen der Prägewalze und der Bahngeschwindigkeit des Films oder Laminats in der Prägestation erreicht wird, wobei der Film oder das Laminat mit einer zwar regelbaren, aber zum Zeitpunkt des registerhaltigen Prägens konstanten Geschwindigkeit durch den zwischen der Gegenwalze und der Prägewalze ausgebildeten Prägebereich bewegt wird.

Die Erfindung will also nicht unbedingt bereits bei Eintritt des Films in die Prägestation oder bei der Bildung des Laminats eine Registerhaltigkeit zwischen dem längsgedehnten Druckbild und dem rotierenden Prägebild der Prägewalze eingestellt oder erreicht haben, sondern erst bei dem prägenden Kontakt zwischen der von dem Film oder dem den Film aufweisenden Laminat gebildeten Bahn mit dem Prägebild des Prägezylinders. Insbesondere soll die eingestellte Relativgeschwindigkeit zwischen Bahngeschwindigkeit und Umfangsgeschwindigkeit der Prägewalze vorzugsweise mehr als eine Feinkorrektur im Sinne des Ausgleichs eines bestehenden lediglich geringfügigen Längenunterschiedes durchführen.

Die Erfindung schlägt daher vor, den aufgrund einstellbarer möglicher Prägelängen mit einer Prägewalze erzielbaren Verarbeitungsbereich an unterschiedlichen Druckbildlängen dadurch zu vergrößern, dass die Prägewalze beim Prägevorgang grundsätzlich - insbesondere ohne ein gleichzeitiges oder vorhergehendes Anheben oder Abheben der Prägewalze von der Materialbahn des Films oder Laminats und insbesondere auch ohne eine Verringerung des Anpressdruckes zwischen Gegenwalze und Prägewalze - mit einer eine Relativgeschwindigkeit zur Bahngeschwindigkeit des Films oder Laminats und zur Umfangsgeschwindigkeit der Gegenwalze bewirkenden und ausbildenden Umfangsgeschwindigkeit bewegt wird, d.h. rotiert. Dadurch gleitet oder "schmiert" die Prägewalze dann grundsätzlich immer leicht auf der Oberfläche der von dem Film oder dem Laminat gebildeten Materialbahn, wenn eine Längendifferenz zwischen der gestreckten, längsgedehnten Druckbildlänge und der auf der Prägewalze ausgebildeten Prägebildlänge des Prägebildes ausgeglichen werden muss. Ist die zu prägende Druckbildlänge kleiner als die Prägebildlänge, dann ist die Umfangsgeschwindigkeit der Prägewalze größer als die Umfangsgeschwindigkeit der Gegenwalze und größer als die Bahngeschwindigkeit des Films oder Laminats. Ist die zu prägende Druckbildlänge größer als die Prägebildlänge, dann ist die Umfangsgeschwindigkeit der Prägewalze kleiner als die Umfangsgeschwindigkeit der Gegenwalze und kleiner als die Bahngeschwindigkeit des Films oder Laminats. Das registerhaltige Prägen wird also mittels der Einstellung einer die jeweilige Längendifferenz von Druckbild und Prägebild ausgleichenden Relativgeschwindigkeit zwischen der Prägewalze einerseits und der Gegenwalze sowie der Bahngeschwindigkeit des Films oder Laminats andererseits erreicht, wobei die Umfangsgeschwindigkeit von Gegenwalze und Bahn oder Film oder Laminat gleich sind. Hierbei wird aber ergänzend zuvor die Druckbildlänge des Films oder des Laminats vor dem prägenden Kontakt mit der Prägewalze auf eine gewünschte Länge, insbesondere eine konstante Druckbildlänge, längsgedehnt, die größer oder größer gleich oder kleiner oder kleiner gleich der Prägebildlänge oder des Umfangs der Prägewalze ist. Durch diese Vordehnung oder Längsdehnung wird ein Teil der notwendigen Längenanpassung, wenn nicht sogar bereits die gesamte notwendige Längenanpassung, zwischen Druckbild und Prägebild bereits vollzogen, bevor es zu einem prägenden Kontakt mit der Prägewalze kommt. Erfindungsgemäß ist also vorgesehen, zunächst zumindest eine Teilanpassung der Druckbildlänge des Films oder des Laminats an die Prägebildlänge des auf der Prägewalze ausgebildeten Prägebildes vorzunehmen und anschließend eine in der Regel grundsätzlich verbleibende Längenanpassung zwischen Druckbild und Prägebild zur Erzeugung der für ein registerhaltiges Prägen mittels der Prägewalze notwendigen Prägelänge durch die aus der Relativgeschwindigkeit zwischen der Umfangsgeschwindigkeit der Prägewalze und der Bahngeschwindigkeit des Films oder Laminats resultierende Anpassung der durch die Prägebildlänge bewirkten Prägelänge an die vorgelegte Druckbildlänge vorzunehmen. Eine solche Relativgeschwindigkeit macht sich dann im Prägebild nicht bemerkbar, ermöglicht es aber, mit einer Prägewalze sowohl vorgelegte Druckbilder, die eine gegenüber der Prägebildlänge der Prägewalze kleinere Druckbildlänge aufweisen, als auch solche vorgelegten Druckbilder, die eine gegenüber der Prägebildlänge größere Druckbildlänge aufweisen, zu prägen. Grundsätzlich soll also in der Prägestation durch Einstellung einer zur Bahngeschwindigkeit des Films oder Laminats unterschiedlichen Umfangsgeschwindigkeit der Prägewalze eine gewünschte verbleibende Längenanpassung eliminiert oder ausgeglichen werden. Bei einer solchen Längenanpassung handelt es sich nicht um eine lediglich geringfügige Längenunterschiede ausgleichende Feinkorrektur, wie sie in der EP 2 636 524 B1 offenbart ist.

Andererseits umfasst das erfindungsgemäße Vorgehen natürlich auch die Möglichkeit, dass der registerhaltig zu prägende Film oder das registerhaltig zu prägende Laminat mit einer derart längsgedehnten Druckbildlänge von der Gegendruckwalze erfasst in die Prägestation einläuft, die quasi exakt, d.h. mit den fachspezifisch erlaubten Toleranzabweichungen, der Prägebildlänge des auf der Prägewalze abgebildeten Prägebildes entspricht. In einem solchen Fall muss dann natürlich keine Relativgeschwindigkeit zwischen der Bahngeschwindigkeit und der Umfangsgeschwindigkeit der Prägewalze eingestellt werden. Beispielsweise lässt sich eine solche, bei Einlauf in die Prägestation bereits erreichte registerhaltige Längsdehnung des Druckbildes bis zur Erreichung des Festpunktes 2 auf der Gegenwalze bei der Bildung eines Laminats dadurch erreichen, dass das Laminat zwischen dem Festpunkt 1 und dem Festpunkt 2 einer elastischen Längsdehnung auf die registerhaltige Druckbildlänge des Druckbildes des Laminats unterworfen wird.

Die Erfindung ermöglicht also dadurch die Verarbeitung oder das Verarbeiten größerer Bandbreiten an Druckbildlängen bei einem registerhaltigen Prägen mittels einer Prägewalze, dass eine notwendige Längenanpassung weder alleine oder ausschließlich durch eine Längsdehnung des Films und Laminats, und damit eine Druckbildanpassung an das Prägebild, noch alleine oder ausschließlich durch eine Anpassung der Umfangsgeschwindigkeit der Prägewalze, und damit die Ausbildung einer Relativgeschwindigkeit zwischen Prägewalze und Bahngeschwindigkeit des zu prägenden Films oder Laminats, d.h. eine Anpassung der durch die Prägebildlänge des Prägebildes bewirkten Prägelänge an die Druckbildlänge, beschränkt ist. Vielmehr umfasst das erfindungsgemäße Verfahren gerade beide Möglichkeiten, so dass das Einsatzspektrum einer einen bestimmten Durchmesser aufweisenden Prägewalze in Bezug auf registerhaltig zu prägende Ausgangs-Druckbildlängen deutlich vergrößert ist. Hierbei macht sich die Erfindung insbesondere die plastischen und/oder elastischen Eigenschaften des Films zu Eigen, die zum einen vor der Prägestation dahingehend ausgenutzt werden, dass eine gegebenenfalls notwendige oder gewünschte Längsdehnung des Films oder Laminats durchgeführt wird, und die zum anderen in der Prägevorrichtung ein "schmierendes" Gleiten der Prägewalzenoberfläche auf der zu prägenden Oberfläche des Films oder Laminats ermöglichen. Die durch die Gegenwalze der Prägestation bewirkte Anpressung des Filmes oder Laminats an die Prägeoberfläche der Prägewalze wird dabei derart eingestellt, dass ein solches "schmierendes" Gleiten dauerhaft während einer Betriebsphase ohne Veränderung oder Verstellung des Anpressdruckes der Gegenwalze möglich ist.

In Ausgestaltung sieht die Erfindung für eine besonders zweckmäßige und vorteilhafte Durchführung des Verfahrens vor, dass der dehnbare Film oder das Laminat während seines Durchlaufs durch die Prägestation zwischen einem in Laufrichtung des Films vor der Prägestation ausgebildeten, den Film oder das Laminat stützend haltenden, ersten Festpunkt und einem in der Prägestation von und/oder auf der Gegenwalze ausgebildeten zweiten, den Film oder das Laminat stützend haltenden Festpunkt registerlängengesteuert längsgedehnt wird und von dem ersten Festpunkt über den zweiten Festpunkt zwischen der Gegenwalze und der Prägewalze hindurch durch die Prägestation mit der zwar regelbaren, aber nach Einstellung der gewünschten Längsdehnung gleichbleibenden oder einen gleichbleibenden Bahnzug bewirkenden Bahngeschwindigkeit zu einem dritten, den Film oder das Laminat stützend haltenden Festpunkt geführt wird, wobei zwischen dem ersten Festpunkt und dem zweiten Festpunkt die Druckbildlänge des Films oder Laminats auf eine Länge größer oder größer gleich oder kleiner oder kleiner gleich der Prägebildlänge oder des Umfangs der Prägewalze längsgedehnt wird und die Registerhaltigkeit des Prägens durch eine eine oder die gegebenenfalls bestehende Längendifferenz zwischen dem längsgedehnten Druckbild des Films oder Laminats und dem Prägebild der Prägewalze korrigierend ausgleichende Umfangsgeschwindigkeit der Prägewalze und der dadurch bestimmten Relativgeschwindigkeit zwischen der Umfangsgeschwindigkeit der Prägewalze und der Bahngeschwindigkeit erreicht wird.

Eine besonders zweckmäßige und vorteilhafte Einstellung der für die Anpassung der Prägebildlänge notwendigen Relativgeschwindigkeit lässt sich gemäß weiterer Ausgestaltung der Erfindung dadurch erreichen, dass bei einer an einem zweiten Festpunkt, insbesondere dem zweiten Festpunkt, oder im Bereich eines zweiten Festpunktes, insbesondere des zweiten Festpunktes, bestehenden Längendifferenz zwischen dem längsgedehnten Druckbild des Films oder Laminats und dem Prägebild der Prägewalze die Registerhaltigkeit des Prägens durch eine die jeweils bestehende Längendifferenz zwischen dem längsgedehnten Druckbild und dem Prägebild der Prägewalze korrigierend ausgleichende Ein- und/oder Verstellung der Umfangsgeschwindigkeit der Prägewalze und der dadurch bestimmten Relativgeschwindigkeit zwischen der Umfangsgeschwindigkeit der Prägewalze und der Bahngeschwindigkeit des Films oder Laminats erreicht wird.

Vorzugsweise wird bei dem registerhaltigen Prägen die Umfangsgeschwindigkeit der Gegenwalze konstant gehalten, was die Erfindung in Weiterbildung ebenfalls vorsieht.

Es ist aber auch möglich, dass bei einer an einem zweiten Festpunkt, insbesondere dem zweiten Festpunkt, oder im Bereich eines zweiten Festpunktes, insbesondere des zweiten Festpunktes, bestehenden Längendifferenz zwischen dem längsgedehnten Druckbild des Films oder Laminats und dem Prägebild der Prägewalze die Registerhaltigkeit des Prägens durch eine die jeweils bestehende Längendifferenz zwischen dem längsgedehnten Druckbild des Films oder Laminats und dem Prägebild der Prägewalze korrigierend ausgleichende Kombination einer Umfangsgeschwindigkeitsveränderung sowohl der Umfangsgeschwindigkeit der Gegenwalze als auch der Umfangsgeschwindigkeit der Prägewalze unter Einstellung der gewünschten ausgleichenden Relativgeschwindigkeit zwischen der Umfangsgeschwindigkeit der Prägewalze und der Bahngeschwindigkeit des Films oder Laminats erreicht wird, was die Erfindung ebenfalls vorsieht.

Eine weitere Möglichkeit besteht gemäß Ausgestaltung der Erfindung auch darin, dass bei einer an einem zweiten Festpunkt, insbesondere dem zweiten Festpunkt, oder im Bereich eines zweiten Festpunktes, insbesondere des zweiten Festpunktes, bestehenden Längendifferenz zwischen dem längsgedehnten Druckbild des Films oder Laminats und dem Prägebild der Prägewalze die Registerhaltigkeit des Prägens durch eine die jeweils bestehende Längendifferenz zwischen dem längsgedehnten Druckbild des Films oder Laminats und dem Prägebild der Prägewalze korrigierend ausgleichende Ein- und/oder Verstellung der Umfangsgeschwindigkeit der Prägewalze und der dadurch bestimmten Relativgeschwindigkeit zwischen der Umfangsgeschwindigkeit der Prägewalze und der Bahngeschwindigkeit des Films oder Laminats erreicht wird, wobei ein Verhältnis der Umfangsgeschwindigkeit der Prägewalze zur Umfangsgeschwindigkeit der Gegenwalze eingestellt wird, das gleich dem Verhältnis der Prägebildlänge der Prägewalze zur Länge des längsgedehnten Druckbildes des Films oder des Laminats an diesem zweiten Festpunkt oder im Bereich dieses zweiten Festpunktes ist.

Mit dem erfindungsgemäßen Verfahren sind verschiedene Längsdehnungen des Druckbildes oder des Films oder Laminats bis zur Erreichung der Prägestation oder des zweiten Festpunktes möglich. Die Erfindung sieht daher weiterhin vor, dass das Druckbild des Films oder des Laminats zwischen einem ersten Festpunkt, insbesondere dem ersten Festpunkt, und einem zweiten Festpunkt, insbesondere dem zweiten Festpunkt, auf eine Maßabweichung des längsgedehnten Druckbildes von der Prägebildlänge der Prägewalze von bis zu 50 mm, vorzugsweise bis zu 10 mm, insbesondere bis zu 3-5 mm, ganz besonders bevorzugt 0,01 - 1mm, größer oder kleiner als die Prägebildlänge der Prägewalze längsgedehnt wird. Hierbei beträgt die "Soll"-Ausgangsdruckbildlänge insbesondere 1600 mm.

Es ist aber auch möglich, dass das Druckbild des Films oder des Laminats zwischen einem ersten Festpunkt, insbesondere dem ersten Festpunkt, und einem zweiten Festpunkt, insbesondere dem zweiten Festpunkt, auf eine Maßabweichung des längsgedehnten Druckbildes von der Prägebildlänge der Prägewalze von 0,1 - 20 %, vorzugsweise von 0,5 - 15 %, insbesondere von 1 - 3 %, größer oder kleiner als die Prägebildlänge der Prägewalze, insbesondere dem zweiten Festpunkt, längsgedehnt wird. Auch hierbei beträgt die "Soll"-Ausgangsdruckbildlänge insbesondere 1600 mm.

Um das "schmierende" Gleiten der Prägewalze auf der Oberfläche des Films oder Laminats zu ermöglichen, ist es zweckmäßig, wenn der Film oder das Laminat zwischen einem ersten Festpunkt, insbesondere dem ersten Festpunkt, und einem zweiten Festpunkt, insbesondere dem zweiten Festpunkt, insbesondere auf eine Temperatur erwärmt wird, die eine plastische Verformung des Films oder des Laminats ermöglicht, was die Erfindung ebenfalls vorsieht.

Grundsätzlich ist es auch so, dass der Film oder das Laminat zwischen einem/dem ersten Festpunkt und einem/dem zweiten Festpunkt plastisch und/oder elastisch längsgedehnt wird. Für die Regelung und Durchführung des Verfahrens ist es gemäß weiterer Ausgestaltung der Erfindung von Vorteil, dass der Film oder das Laminat zwischen einem ersten Festpunkt, insbesondere dem ersten Festpunkt, und einem zweiten Festpunkt, insbesondere dem zweiten Festpunkt, plastisch und/oder elastisch längsgedehnt wird. Insbesondere ist es aber gegebenenfalls zweckmäßig und vorteilhaft, die längsgedehnte Druckbildlänge noch nicht zu 100 % auf die Prägebildlänge vor Eintritt des Laminats oder des Films in die Prägestation vorzudehnen.

Die Erfindung zeichnet sich daher weiterhin dadurch aus, dass der Film oder das Laminat zwischen einem ersten Festpunkt, insbesondere dem ersten Festpunkt, und einem zweiten Festpunkt, insbesondere dem zweiten Festpunkt, auf eine konstante Druckbildlänge längsgedehnt wird.

Da die Anpassung der Prägebildlänge an die Druckbildlänge durch das "schmierende" Gleiten der Prägewalze auf dem zu prägenden Film oder Laminat erfolgen soll und dazu der plastische Zustand des Films oder Laminats ausgenutzt wird, ist eine Anstellung oder Änderung des Anpressdruckes von Gegenwalze zur Prägewalze nicht notwendig. Die Erfindung zeichnet sich daher weiterhin dadurch aus, dass die Ein- und/oder Verstellung oder Änderung und Anpassung der korrigierend ausgleichenden Relativgeschwindigkeit der Umfangsgeschwindigkeit der Prägewalze zur Bahngeschwindigkeit des Films oder des Laminats während des kontinuierlichen Prägeprozesses ohne Änderung des Anpressdrucks von Gegenwalze und Prägewalze und ohne ein Anheben oder Abheben von Gegenwalze und Prägewalze durchgeführt wird.

In vorteilhafter Weise lässt sich die gewünschte Relativgeschwindigkeit der Prägewalze dadurch einstellen, dass am ersten, zweiten und dritten Festpunkt eine der Umfangsgeschwindigkeit der Gegenwalze entsprechende Bahngeschwindigkeit eingestellt wird und die Prägewalze mit einer davon abweichenden größeren oder kleineren Umfangsgeschwindigkeit unter Einstellung der korrigierend ausgleichenden Relativgeschwindigkeit zwischen Prägewalzenumfangsgeschwindigkeit und Bahngeschwindigkeit eingestellt wird, was die Erfindung weiterhin vorsieht.

Von Vorteil ist es zudem, wenn vor dem Eintritt des Films oder Laminats in die Prägestation eine konstante längsgedehnte Druckbildlänge eingestellt wird. Die Erfindung sieht daher weiterhin vor, dass zwischen einem ersten Festpunkt, insbesondere dem ersten, und einem zweiten Festpunkt, insbesondere dem zweiten Festpunkt, eine konstante längsgedehnte Druckbildlänge des Druckbildes des Films oder Laminats eingestellt wird und die Registerhaltigkeit des Prägens durch eine eine oder die jeweils bestehende Längendifferenz zwischen dem längsgedehnten Druckbild des Films oder Laminats und dem Prägebild der Prägewalze korrigierend ausgleichende Anpassung der registerhaltig prägenden Prägelänge des Prägebildes der Prägewalze mittels variabler Anpassung der Umfangsgeschwindigkeit der Prägewalze an die eingestellte längsgedehnte Druckbildlänge und damit der korrigierend ausgleichenden Relativgeschwindigkeit zwischen der Umfangsgeschwindigkeit der Prägewalze und der Bahngeschwindigkeit des Films oder Laminats in der Prägestation erreicht wird. Hierbei ist es besonders zweckmäßig, wenn eine konstante längsgedehnte Druckbildlänge eingestellt wird, die größer oder kleiner als die Prägebildlänge ist, was die Erfindung ebenfalls vorsieht.

Für die Ausbildung eines Laminates, das in der Regel eine stabilisierende Schicht oder Lage (Backing) aufweist, die - wenn überhaupt - deutlich weniger längsdehnbar ist, als beispielsweise ein darauf aufzubringender PVC-Film, ist es von Vorteil, wenn der das Druckbild aufweisende Film bereits vor Bildung des Laminates, vorzugsweise auf eine konstante Druckbildlänge, längsgedehnt wird. Die Erfindung zeichnet sich daher in vorteilhafter Ausgestaltung dadurch aus, dass der Film einem ersten Festpunkt, insbesondere dem ersten Festpunkt, mit einer zwischen diesem ersten Festpunkt und einem diesem vorgelagerten nullten, den Film stützend haltenden Festpunkt eingestellten Vordehnung des Druckbildes des Films in Längsrichtung und der Druckbildlänge des Films zugeführt und an diesem ersten Festpunkt oder im Bereich dieses ersten Festpunktes zur Bildung des Laminats auf einen das vorgedehnte Druckbild des Films stabilisierenden Träger auflaminiert wird.

Da aber auch ein Laminat zumindest teilweise noch längsdehnbar ist, sieht die Erfindung auch vor, dass an einem ersten Festpunkt, insbesondere dem ersten Festpunkt, das Laminat gebildet und bis zu einem zweiten Festpunkt, insbesondere dem zweiten Festpunkt, vorzugsweise elastisch, auf die jeweils eingestellte oder gewünschte Druckbildlänge des Films oder Laminats längsgedehnt wird.

Insbesondere dann, wenn ein Film zunächst vorgedehnt und dann als Laminat nochmals gedehnt wird oder wenn nach Bildung des Laminats eine das registerhaltige Prägen ermöglichende Längenanpassung von Druckbild und Prägebild vorgenommen werden muss, ist gemäß Weiterbildung der Erfindung ein Verfahren zum kontinuierlichen registerhaltigen Prägen zweckmäßig, bei welchem der Film und dessen Druckbildlänge zwischen einem nullten Festpunkt, insbesondere dem nullten Festpunkt, und einem ersten Festpunkt, insbesondere dem ersten Festpunkt, auf eine, insbesondere konstante, Druckbildlänge, vorzugsweise plastisch, längsgedehnt werden, an dem ersten Festpunkt oder im Bereich des ersten Festpunktes der derart längsgedehnte Film unter Bildung des Laminats auf einen/den das längsgedehnte Druckbild stabilisierenden Träger (Backing) auflaminiert wird und zwischen dem ersten Festpunkt und einem dritten Festpunkt, insbesondere dem dritten Festpunkt, die Druckbildlänge des derart erhaltenen Laminats und die prägende Prägelänge des Prägebildes der Prägewalze durch eine, vorzugsweise elastische, korrigierende Längsdehnung des Laminats zwischen dem ersten Festpunkt und einem zweiten Festpunkt, insbesondere dem zweiten Festpunkt, und/oder durch die/eine korrigierend ausgleichende Relativgeschwindigkeitseinstellung zwischen der Umfangsgeschwindigkeit der Prägewalze und der Bahngeschwindigkeit des Laminats aneinander angepasst werden, wobei diese korrigierende Längenanpassung >3%, >20%, insbesondere >50%, der Korrekturgröße der zwischen dem nullten Festpunkt und dem ersten Festpunkt eingestellten Druckbildlänge beträgt. Der hier angegebene prozentuale Korrekturwert bezieht sich auf die "Korrekturgröße" als Bezugspunkt, die zur Längenanpassung des Druckbildes zwischen dem nullten Festpunkt (Festpunkt 0) und dem ersten Festpunkt (Festpunkt 1) eingestellt wird und nicht auf die (dadurch) dann eingestellte Druckbildlänge. Die relativ hohen prozentualen Korrekturwerte verdeutlichen, dass es sich bei der zweiten Korrektur- oder Längenanpassung des Druckbildes des Laminats zwischen dem ersten und dem zweiten Festpunkt verglichen mit der ersten Korrektur oder Längenanpassung des Druckbildes des Films zwischen dem nullten und dem ersten Festpunkt nicht lediglich um eine Feinkorrektur handelt.

In weiterer Ausgestaltung zeichnet sich die Erfindung auch noch dadurch aus, dass das Druckbild des Films oder Laminats zu einem zweiten Festpunkt, insbesondere zum zweiten Festpunkt, auf eine konstante Druckbildlänge längsgedehnt wird, die kleiner oder größer als die Prägebildlänge der Prägewalze ist, und dass die prägende Prägelänge der Prägewalze mittels einer die an die längsgedehnte Druckbildlänge angepasste, korrigierend ausgleichende Relativgeschwindigkeit der Prägewalze zur Bahngeschwindigkeit des Films oder Laminats erzeugenden Umfangsgeschwindigkeit der Prägewalze auf die längsgedehnte Druckbildlänge des Films oder Laminats abgestimmt wird, wobei das Verhältnis von Umfangsgeschwindigkeit der Prägewalze zur Umfangsgeschwindigkeit der Gegenwalze konstant gleich dem Verhältnis von der Prägebildlänge auf der Prägewalze zur längsgedehnten Druckbildlänge des Films oder Laminats an dem zweiten Festpunkt oder im Bereich des zweiten Festpunktes eingestellt wird.

Ein nach einem der Ansprüche 1-20 hergestelltes, geprägtes Laminat kann als Oberflächenmaterial eines Fußbodenlaminats, eines Wand- oder Bodenfliesenlaminats oder einer Oberfläche eines Gebrauchsgegenstandes Verwendung finden.

Eine Vorrichtung zur Durchführung eines Verfahrens nach einem oder mehreren der Ansprüche 1-20 umfasst eine Laminier- oder Kaschiervorrichtung mit mindestens zwei zugeordneten Zuführwerkzeugen, wobei über ein erstes Zuführwerkzeug ein elastisch und/oder plastisch längsdehnbarer und ein sich nach einer Registerlänge wiederholendes Druckbild aufweisender Printfilm und über ein zweites Zuführwerkzeug ein nur begrenzt elastisch längsdehnbarer Träger geführt der Laminier- oder Kaschiervorrichtung zuführbar und in oder auf dieser unter Ausbildung eines Verbundmaterials oder Laminats in eine gewünschte Übereinanderlage bringbar sind und wobei zumindest das erste, eine Vorheizwalze umfassende Zuführwerkzeug und die eine Laminiertrommel umfassende Laminier- oder Kaschiervorrichtung zueinander abstandsveränderbar und/oder mit voneinander abweichenden Rotationsgeschwindigkeiten und/oder mit gegenläufigen Drehrichtungen betreibbar ausgebildet sind und wobei der Laminier- oder Kaschiervorrichtung eine ein Prägewerkzeug aufweisende Prägestation zugeordnet ist, der das Laminat zur registerhaltigen Prägung zuführbar ist, wobei die Laminier- oder Kaschiervorrichtung und das Prägewerkzeug zueinander abstandsveränderbar und/oder mit voneinander abweichenden Rotationsgeschwindigkeiten und/oder mit gegenläufigen Drehrichtungen betreibbar ausgebildet sind.

Die Vorrichtung kann in Fertigungsrichtung des registerhaltig geprägten Laminats hinter der Prägestation die Registerlänge des Druckbildes des geprägten Laminats messende Bahn-Bahn-Sensoren aufweisen.

Die Erfindung ist nachstehend anhand einer Zeichnung näher erläutert. Diese zeigt in
- Fig. 1: in schematischer Darstellung eine Vorrichtung zur Durchführung des erfindungsgemäßen Verfahrens zur registerhaltigen Prägung eines Laminates mit einer ersten Art der Einstellung und Regelung der Relativgeschwindigkeit zwischen Prägewalze und Gegendruckwalze,
- Fig. 2: in schematischer Darstellung eine Vorrichtung zur Durchführung des erfindungsgemäßen Verfahrens zur registerhaltigen Prägung eines Laminates mit einer zweiten Art der Einstellung und Regelung der Relativgeschwindigkeit zwischen Prägewalze und Gegendruckwalze,
- Fig. 3: in schematischer Darstellung Elemente zur Durchführung des registerhaltigen Prägens eines Printfilms,
- Fig. 4: in schematischer Darstellung eine Vorrichtung zur Durchführung der erfindungsgemäßen Verfahren,
- Fig. 5: in schematischer Darstellung eine Schnittzeichnung durch ein in einer Laminier- oder Kaschiervorrichtung gebildetes Laminat,
- Fig. 6: in schematischer Darstellung die zweistufige Dehnung eines Laminats auf eine registerhaltige Druckbildlänge und in
- Fig. 7: in schematischer Darstellung eine zweistufige Längsdehnung des Laminats auf eine annähernde registerhaltige Druckbildlänge mit schmierender Relativgeschwindigkeit der Prägewalze.

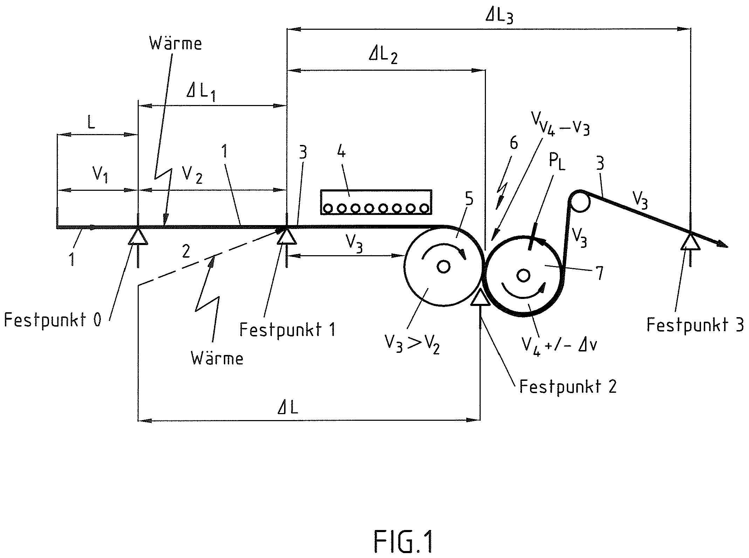

Die Figur 1 zeigt schematisch eine Ausführungsform des erfindungsgemäßen Verfahrens, bei welcher ein elastisch dehnbarer Film 1, bei dem es sich um einen PVC-Film handeln kann, mit einer Bahngeschwindigkeit V₁ einem nullten Festpunkt (Festpunkt 0) zugeführt wird. Von dort aus wird der Film 1 mit einer Bahngeschwindigkeit V₂, die größer V₁ ist, zu einem ersten Festpunkt (Festpunkt 1) geführt, bei welchem der Film 1 auf einen zugeführten Träger 2 oder ein sogenanntes Backing auflaminiert wird. Auf der Strecke vom Festpunkt 0 zum Festpunkt 1 erfolgt eine erste Längsdehnung oder Vordehnung des mit einem aufgedruckten, sich regelmäßig wiederholenden Druckbild versehenen (Print)Films 1. Diese Längsdehnung ΔL₁ wird durch eine Steuerung des Bahnzuges zwischen dem nullten und dem ersten Festpunkt oder durch unterschiedliche Walzengeschwindigkeiten an den Festpunkten 0 und 1 oder durch eine Abstandsveränderung der Walzen an den Festpunkten 0 und 1 bewirkt. An den Festpunkten 0 und 1 sind beispielsweise dann Walzen vorhanden, wenn am Festpunkt 1 eine Laminierung des Films 1 auf den Träger 2 mittels einer Laminiertrommel 8, die als Walze ausgebildet ist, erfolgt und die Zuführung des Films 1 zu der Laminiertrommel 8 über eine am Festpunkt 0 angeordnete Vorheizwalze 9 geführt wird. Eine solche Ausbildung einer Kombination einer Laminierstation mit einer Prägestation ist beispielsweise in der DE 10 2014 101 554 A1 beschrieben, auf deren Offenbarungsgehalt hiermit ausdrücklich Bezug genommen wird. Zwischen dem ersten Festpunkt (Festpunkt 1) und einem auf der oder im Bereich der Gegenwalze 5 der Prägestation 6 ausgebildeten zweiten Festpunkt (Festpunkt 2) wird das Laminat 3 mittels einer Heizvorrichtung 4 auf eine eine plastische Verformung ermöglichende Temperatur erwärmt und mittels einer Bahngeschwindigkeit V₃, die größer als die Bahngeschwindigkeit V₂ ist, einer zweiten Längsdehnung ΔL₂ unterworfen. Im zweiten Festpunkt 2 ist dann eine längsgedehnte Druckbildlänge (L + ΔL₁ + AL₂) des Druckbildes eingestellt, die kleiner oder größer als die Prägebildlänge P_{L} eines auf der Prägewalze 7 der Prägestation 6 ausgebildeten Prägebildes ist. Mit der Bahngeschwindigkeit V₃ wird das Laminat 3 dann bis zu einem dritten Festpunkt (Festpunkt 3) geführt. In der Prägestation 6 wird das längsgedehnte Druckbild des Laminats 3 mittels des Prägebildes der Prägewalze 7 registerhaltig geprägt. Zur Anpassung der das Druckbild prägenden Prägelänge P_{L} des auf der Prägewalze 7 ausgebildeten Prägebildes an die Druckbildlänge (L + ΔL₁ + ΔL₂) des längsgedehnten Druckbildes des Laminats 3 wird in der Prägestation 6 die Prägewalze 7 mit einer eine korrigierend ausgleichende Relativgeschwindigkeit V_{V4-V3} zur Bahngeschwindigkeit V₃ des Laminats und zur Umfangsgeschwindigkeit V₃ der Gegenwalze 5 bewirkenden Umfangsgeschwindigkeit V₄ bewegt. Die Umfangsgeschwindigkeit V₄ ist unterschiedlich zur Bahngeschwindigkeit V₃ und wird derart eingeregelt, dass die Prägebildlänge P_{L} genau auf der vorgelegten Druckbildlänge (L + ΔL₁ + ΔL₂) des längsgedehnten Druckbildes des Laminates 3 abrollt, d.h. zum Zeitpunkt des registerhaltigen Prägens die prägende Prägelänge P_{L} der durch den prägenden Kontakt des Prägebildes mit dem Laminat 3 oder dem Film 1 bewirkten Prägung gleich der längsgedehnten Druckbildlänge (L + ΔL₁ + ΔL₂) wird. Die Prägung erfolgt ohne ein Abheben der Prägewalze 7 von der Materialbahn 3 und der Gegenwalze 5 und nutzt ausschließlich die plastischen Eigenschaften des Films 1, wobei die Prägewalze 7 über das Laminat 3 rutschen oder "schmieren" kann. Die Längsdehnung ΔL₁ des Films 1 vor dessen Auflaminieren auf den Träger 2 wird mittels einer Steuerung des Bahnzuges (Film), beispielsweise mittels unterschiedlicher Walzengeschwindigkeiten am Festpunkt 0 und Festpunkt 1 oder mittels einer Abstandsveränderung der abstandsveränderbar am Festpunkt 0 und am Festpunkt 1 angeordneten Walzen erreicht. Zwischen dem Festpunkt 1 und dem Festpunkt 3 (ΔL₃) wird/werden ein konstanter Bahnzug und/oder eine konstante Bahngeschwindigkeit über die Gegen(druck)walze 5 der Prägestation 6 und/oder den Antrieb im Festpunkt 1 und/oder im Festpunkt 3 geregelt. Die Längsdehnung ΔL₂ des Druckbildes des Laminates 3 wird zwischen dem Festpunkt 1 und dem Festpunkt 2 auf eine Länge des Druckbildes bezogen insbesondere derart registerlängengesteuert eingestellt, dass das sich einstellende längsgedehnte Druckbild (L + ΔL₁ + ΔL₂) kleiner oder größer als der Umfang der Prägewalze 7 und damit kleiner oder größer als die Prägebildlänge P_{L} des reliefartig auf der Umfangsfläche der Prägewalze 7 ausgebildeten Prägebildes ist. Die registerhaltige Prägung wird dann durch eine Relativbewegung, nämlich die unterschiedliche, korrigierend ausgleichende Relativgeschwindigkeit V_{V4-V3} der Prägewalze 7 zur Material- oder Warenbahn, d.h. zum Laminat 3, ohne Verminderung des, insbesondere von der Gegenwalze 5 aufgebrachten, Prägedruckes sichergestellt. Der für die Einstellung der Relativbewegung oder der Relativgeschwindigkeit V_{V4-V3} der Prägewalze 7 notwendige Regelanteil +/- ΔV wirkt in diesem Fall auf die Umfangsgeschwindigkeit V₄ der Prägewalze 7.

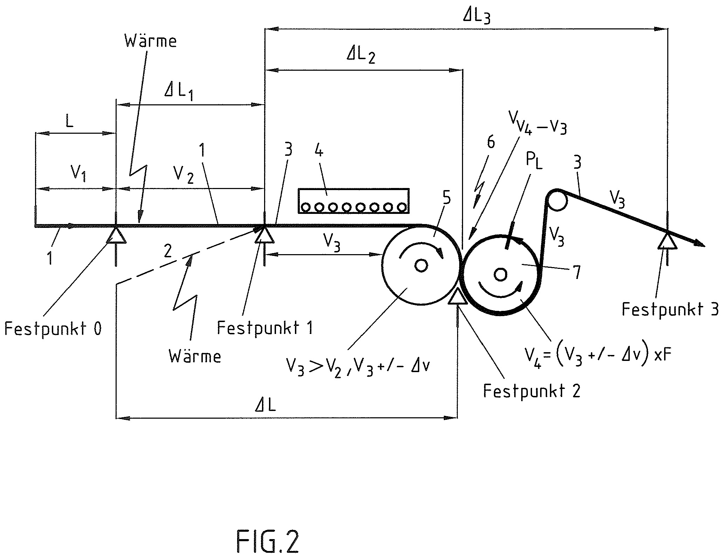

Bei dem zum ersten Ausführungsbeispiel anlagentechnisch gleich aufgebauten, aber regelungstechnisch unterschiedlichen Ausführungsbeispiel des erfindungsgemäßen Verfahrens nach Fig. 2 besteht der einzige Unterschied in der Regelung der Umfangsgeschwindigkeiten V₃ der Gegenwalze 5 und V₄ der Prägewalze 7. Während beim ersten Ausführungsbeispiel die eingeregelte oder eingestellte Umfangsgeschwindigkeit V₃ der Gegenwalze 5 konstant bleibt und der Ausgleich der Längendifferenz zwischen dem längsgedehnten Druckbild (L + ΔL₁ + ΔL₂) und der Prägebildlänge P_{L} ausschließlich durch eine korrigierend ausgleichende Anpassung der Umfangsgeschwindigkeit V₄ der Prägewalze 7 realisiert wird, werden bei diesem zweiten Ausführungsbeispiel zur Anpassung von längsgedehnter Druckbildlänge (L + ΔL₁ + ΔL₂) und der prägenden Prägelänge P_{L} des Prägebildes während der Prägung sowohl die Umfangsgeschwindigkeit V₃ der Gegenwalze 5 als auch die Umfangsgeschwindigkeit V₄ der Prägewalze 7 verstellt bzw. eingestellt und eingeregelt. Zwar bewegt sich die Prägewalze 7 weiterhin mit einer zur jeweiligen Bahngeschwindigkeit V₃ und zur jeweiligen Umfangsgeschwindigkeit V₃ der Gegenwalze 5 unterschiedlichen Umfangsgeschwindigkeit V₄, aber die Längenanpassung von längsgedehnter Druckbildlänge und prägender Prägelänge der durch das Prägebild bewirkten Prägung erfolgt immer gleichmäßig in der Art, dass das Verhältnis der Umfangsgeschwindigkeit V₄ der Prägewalze 7 zur Umfangsgeschwindigkeit V₃ der Gegenwalze 5 immer gleich dem Verhältnis der Prägebildlänge P_{L} des Prägebildes auf der Prägewalze 7 zur, in der Regel und insbesondere längsgedehnten, Druckbildlänge (L + ΔL₁ + ΔL₂) des einzelnen Druckbildes des Films 1 oder Laminates 3 beim Verlassen des zweiten Festpunktes (Festpunkt 2) oder beim Inkontakttreten mit der Prägewalze 7 ist. In der Fig. 2 kommt dies dadurch zum Ausdruck, dass V₄ = (V₃ +/- ΔV) x F ist, wobei der Faktor F das Verhältnis von Prägebildlänge P_{L} zu Druckbildlänge (L + ΔL₁ + ΔL₂) darstellt.

Sowohl im Ausführungsbeispiel nach der Fig. 2 als auch im Ausführungsbeispiel nach der Fig. 1 sind die Umfangsgeschwindigkeit V₃ der Gegenwalze 5 und die Bahngeschwindigkeit V₃ des Films 1 oder Laminats 3 zwischen dem ersten Festpunkt (Festpunkt 1) und dem dritten Festpunkt (Festpunkt 3) größer als die Bahngeschwindigkeit V₂ des Films 1 zwischen dem nullten Festpunkt (Festpunkt 0) und dem ersten Festpunkt (Festpunkt 1).

Im Ausführungsbeispiel nach der Fig. 2 wird die Längungsdehnung des Laminates 3 vor seiner Prägung in der Prägestation 6 mittels der Gegenwalze 5, d.h. dem zweiten Festpunkt (Festpunkt 2), in der Prägestation 6 und/oder dem ersten Festpunkt (Festpunkt 1), der beispielsweise auf der Laminiertrommel 8 ausgebildet sein kann, insbesondere auf längsgedehnte Druckbildlängen (L + ΔL₁ + ΔL₂), die kleiner oder größer als der Umfang der Prägewalze 7 und damit des darauf ausgebildeten Prägebildes sind, durchgeführt. Aus dieser Längsdehnung (L + ΔL₁ + ΔL₂) des Laminates resultiert die Bahngeschwindigkeit V₃ zwischen dem ersten Festpunkt (Festpunkt 1) und dem dritten Festpunkt (Festpunkt 3). Für die Durchführung des registergenauen Prägens kommt dann die zusätzliche Relativbewegung V_{V4-V3} der Prägewalze 7 zur Material- oder Warenbahn bzw. zum Laminat 3 hinzu, die ohne Verminderung oder Änderung des Prägedruckes durch die Umfangsgeschwindigkeit V₄ der Prägewalze 7, die wie erwähnt um den Faktor F von der Geschwindigkeit V₃ abweicht, ein registerhaltige Abrollen des Prägebildes auf einem jeweiligen längsgedehnten Druckbild und dadurch eine Prägung des jeweiligen Druckbildes mit einer prägenden Prägelänge P_{L} bewirkt. In diesem Ausführungsbeispiel wird der Regelanteil +/- ΔV sowohl auf die Umfangsgeschwindigkeit V₃ der Gegen(druck)walze 5 als auch auf die Umfangsgeschwindigkeit V₄ der Prägewalze 7 bezogen. Zwischen dem ersten Festpunkt (Festpunkt 1) und dem zweiten Festpunkt (Festpunkt 2) wird die Druckbildlänge des Laminates 3 auf eine konstante, aber vom Umfang der Prägewalze 7, und damit von der Prägebildlänge P_{L}, abweichende Druckbildlänge (L + ΔL₁ + ΔL₂) längsgedehnt. Mittels der Relativbewegung V_{V4-V3} der Prägewalze 7 zur Materialbahn des Laminats 3 wird dann die während des registerhaltigen Prägens prägend auf den Film 1 oder das Laminat 3 wirkende Prägelänge P_{L} des Prägebildes der Prägewalze 7 auf die längsgedehnte Druckbildlänge (L + ΔL₁ + ΔL₂) eingestellt und eingeregelt.

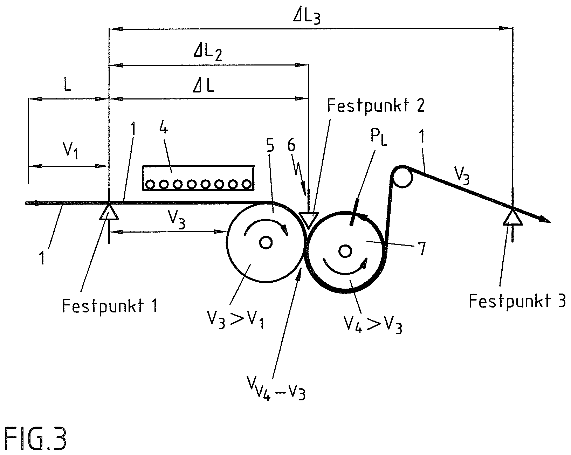

Das Ausführungsbeispiel nach der Fig. 3 zeigt das registerhaltige Prägen eines Films 1, ohne dass dieser auf einen Träger 2 auflaminiert wird. In diesem Ausführungsbeispiel kann der Film 1 beispielsweise auch eine Tapete ausbilden. Bei diesem Ausführungsbeispiel ist die Umfangsgeschwindigkeit V₃ der Gegenwalze 5 ebenso wie die Bahngeschwindigkeit V₃ größer als die Zuführgeschwindigkeit V₁ des Films 1 zum ersten Festpunkt (Festpunkt 1), so dass zwischen dem ersten Festpunkt (Festpunkt 1) und dem zweiten Festpunkt (Festpunkt 2) eine Längsdehnung des Films 1 und damit des darauf aufgedruckten Druckbildes oder der darauf aufgedruckten Druckbilder erfolgt. Da in der Regel die Längsdehnung des Films 1 und damit eines jeden Druckbildes bis zum Festpunkt 2 zu einem jeweils längsgedehnten Druckbild führt, dessen Druckbildlänge kleiner als die Prägebildlänge P_{L} des auf dem Umfang der Prägewalze 7 ausgebildeten Prägebildes ist, ist zudem die Umfangsgeschwindigkeit V₄ der Prägewalze 7 größer als die Bahngeschwindigkeit V₃. Die dadurch bewirkte Relativbewegung und korrigierend ausgleichende Relativgeschwindigkeit V_{V4-V3} zwischen Prägewalze 7 und Materialbahn oder Film 1 wird derart eingestellt und eingeregelt, dass sich während des registerhaltigen Prägens eine Anpassung der prägenden Prägelänge des Prägebildes an die auf dem Film 1 längsgedehnte (L + ΔL₂) Druckbildlänge des Druckbilds einstellt. In diesem Ausführungsbeispiel wirken die Regelanteile +/- ΔV, also die eingestellten Geschwindigkeitsänderung(en), sowohl auf die Umfangsgeschwindigkeit V₃ der Gegen(druck)walze 5 als auch auf die Umfangsgeschwindigkeit V₄ der Prägewalze 7.

In allen Figuren sind jeweils gleiche Elemente oder Bauteile mit denselben Bezugszeichen versehen.

Auch im Abschnitt zwischen dem Festpunkt 0 und dem Festpunkt 1 unterliegt der Film 1 bereits einem Wärmeeinfluss (Vorheizwalze 9 und Laminiertrommel 8) und einer Längsdehnung ΔL₁, so dass bei Bildung des Laminats 3 ein bereits längsgedehntes Druckbild auf den Träger 2 auflaminiert wird.

Die jeweilige Lage des Prägebildes auf der Prägewalze 7, aber auch die Lage des längsgedehnten Druckbildes auf dem Film 1 oder dem Laminat 3 wird mit üblichen, aus der Drucktechnik bekannten Prägemarken und beispielsweise optischen Erfassungsgeräten oder Sensoren 10 detektiert und den notwendigen Regelungen zugrunde gelegt. Entsprechende Erfassungsgeräte können an der Prägewalze 7, vor der Prägestation 6 und auch hinter der Prägestation 6 ausgebildet sein. Beispiele hierfür sind in der DE 10 2014 101 554 A1, der EP 2 447 063 A1 und der EP 2 636 524 A1 beschrieben, worauf zur Ausführung der vorliegenden Erfindung zurückgegriffen werden kann. Die "Soll"-Ausgangsdruckbildlänge L liegt im Bereich zwischen ca. 914,4 mm (36 inch) und 2000 mm, vorzugsweise 1000 mm - 1500 mm, bei Anwendung des metrischen Systems und zwischen 914,4 mm -1219,2 mm (36 inch - 48 inch) bei Anwendung eines imperialen Systems.

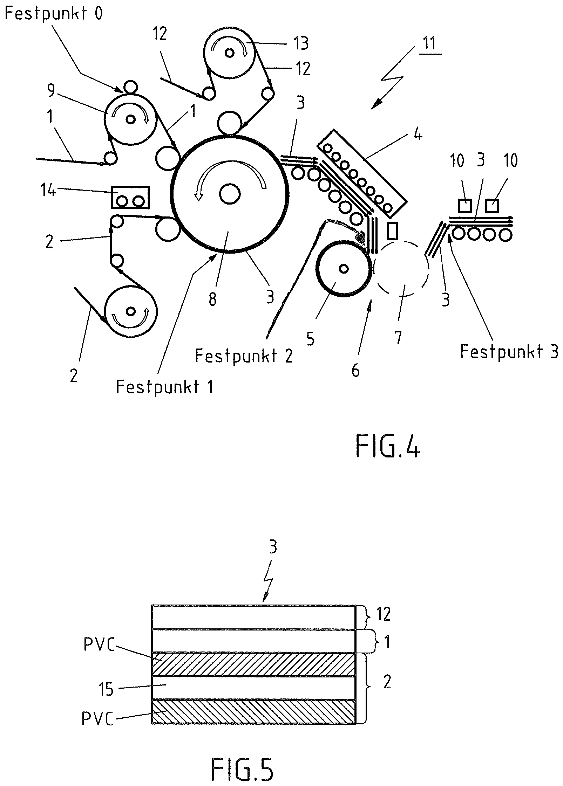

Die zur Durchführung der erfindungsgemäßen Verfahren geeignete und in der Fig. 5 dargestellte, insgesamt mit 11 bezeichnete Anlage oder Vorrichtung zur Herstellung eines registerhaltig geprägten Laminats 3 umfasst die auf eine Temperatur von 100 °C - 180 °C beheizte Laminiertrommel 8, der ein Klarfilm 12, der mit einem sich (regelmäßig) wiederholenden Druckbild einer definierten Druckbildlänge bedruckte Printfilm 1 und der Träger oder das Backing 2 zugeführt und auf der Laminiertrommel 8 zu dem dehnbaren, im Wesentlichen dreischichtigen Laminat 3 in Folienform verarbeitet werden. Anschließend durchläuft das Laminat 3 die (erste) Wärmeeinrichtung 4 (IR-Feld) und wird der Registerpräge oder Prägestation 6 zugeführt, die eine mit einem Prägebild einer definierten Prägebildlänge P_{L} auf ihrem Außenumfang ausgebildete Prägewalze 7 und die Gegendruckwalze 5 umfasst. In der Prägestation 6 erfolgt ein registerhaltiges Prägen des Druckbildes des Printfilms 1 mittels des Prägebildes der Prägewalze 7. Hierbei bildet die Prägestation 6, und zwar vorzugsweise die Gegendruckwalze 5 oder die Prägewalze 7, den das Laminat 3 und damit auch den Printfilm 1 kraftbeeinflussend haltenden zweiten Festpunkt (Festpunkt 2) für das Laminat 3 und den damit verbundenen Printfilm 1 aus. Die Gegendruckwalze 5 rotiert mit einer Umfangsgeschwindigkeit V₃, die gleich der Bandgeschwindigkeit V₃ des Laminats 3 in der Prägestation 6 ist. Die Prägewalze 7 rotiert mit einer Umfangsgeschwindigkeit V₄. Im Anschluss an die Prägestation 6 wird das Laminat 3 mit einer Bandgeschwindigkeit V₃ über einen das Laminat 3 und damit auch den Printfilm 1 kraftbeeinflussend haltenden dritten Festpunkt (Festpunkt 3) aus der Anlage oder Vorrichtung 11 herausgeführt.

Zur Bildung des Laminats 3 wird der Klarfilm 12 zunächst über eine auf eine Temperatur von 50 °C - 120 °C beheizte erste Vorheizwalze 13 geführt und mit einer Temperatur von ca. 40 °C einem auf der Laminiertrommel 8 ausgebildeten ersten Laminierpunkt zugeführt.

Der bedruckte Printfilm 1 wird über die auf eine Temperatur von 30 °C - 70 °C beheizte zweite Vorheizwalze 9 geführt und mit einer Temperatur von ca. 45 °C einem auf der Laminiertrommel 8 ausgebildeten zweiten Laminierpunkt zugeführt. In diesem zweiten Laminierpunkt wird der Printfilm 1 auf den nunmehr eine Temperatur von ca. 155 °C aufweisenden Klarfilm 12 laminiert. Die zweite Vorheizwalze 9 bildet den den Printfilm 1 kraftbeeinflussend haltenden nullten Festpunkt (Festpunkt 0) für den Printfilm 1 aus.

Das Backing 2 wird in einer zweiten Wärmeeinrichtung 14 (IR-Feld) auf eine Temperatur von ca. 160 °C auf seiner Oberseite und eine Temperatur von ca. 40 °C auf seiner Unterseite erwärmt und einem auf der Laminiertrommel 8 ausgebildeten dritten Laminierpunkt zugeführt. In diesem dritten Laminierpunkt wird das Backing 2 auf das nunmehr eine Temperatur von ca. 140 °C aufweisende Vorlaminat aus Klarfilm 12 und Printfilm 1 laminiert. Die Laminiertrommel 8 bildet zudem den das entstandene Laminat 3 und damit den Printfilm 1 kraftbeeinflussend haltenden ersten Festpunkt (Festpunkt 1) für das Laminat 3 und den damit verbundenen Printfilm 1 aus.

Das dreischichtige Laminat 3 verlässt die Laminiertrommel 8 mit einer Temperatur von ca. 155 °C auf seiner Oberseite und einer Temperatur von ca. 60 °C auf seiner Unterseite. Danach durchläuft das Laminat 3 die (erste) Wärmeeinrichtung 4 (IR-Feld) und wird mit einer Temperatur von ca. 160 °C auf seiner Oberseite und einer Temperatur von ca. 80 °C auf seiner Unterseite der Registerpräge oder Prägestation 6 und dem zweiten Festpunkt (Festpunkt 2) zugeführt. Nach dem registerhaltigen Prägen erreicht das Laminat 3 den dritten Festpunkt (Festpunkt 3) mit einer Temperatur von ca. 120 °C auf seiner Oberseite und einer Temperatur von ca. 90 °C auf seiner Unterseite.

Beim Prägen des Laminats 3 in der Registerpräge oder Prägestation 6 kommt es während des laufenden Produktionsbetriebes zu keiner Veränderung des Anpressdrucks zwischen der Prägewalze 7 und der Gegendruckwalze 5 und auch zu keiner, gegebenenfalls kurzfristigen, Trennung von Prägewalze 7 und Gegendruckwalze 5 im Sinne eines Voneinanderentfernens von Prägewalze 7 und Gegendruckwalze 5. Auch ist die Anlage oder Vorrichtung 11 nicht dazu ausgelegt, solche Maßnahmen als Bestandteil des Prägevorganges während des laufenden Produktionsbetriebes auszuführen.

Bei dem bedruckten Printfilm 1 handelt es sich vorzugsweise um einen PVC-Film. Der Printfilm 1 wird dem nullten Festpunkt (Festpunkt 0) mit einer Bahngeschwindigkeit von V₁ zugeführt und danach bis zum ersten Festpunkt (Festpunkt 1) mit einer Bahn- oder Bandgeschwindigkeit V₂ bewegt. Vom ersten Festpunkt (Festpunkt 1) bis zum zweiten Festpunkt (Festpunkt 2) und über diesen hinweg bis zum dritten Festpunkt (Festpunkt 3) wird das Laminat 3 mit der Bandgeschwindigkeit V₃ bewegt. Hierbei gilt V₁ < V₂ < V₃. Dies resultiert insbesondere aus den Längsdehnungen ΔL₁ und ΔL₂ des Films 1 und/oder des Laminats 3.

Die ursprüngliche Druckbildlänge L des bedruckten Printfilms 1 und die Prägebildlänge P_{L} des Prägebildes sind unterschiedlich. Bei der Durchführung eines Ausführungsbeispiels des erfindungsgemäßen Verfahrens findet daher im Bereich ΔL₁ zwischen dem nullten Festpunkt (Festpunkt 0) und dem ersten Festpunkt (Festpunkt 1) regelmäßig immer eine plastische Längsdehnung der Druckbildlänge L des Druckbildes des Printfilms 1 um einen schwankenden Betrag ΔL₁ auf eine konstante Druckbildlänge L + ΔL₁ statt. Mit dieser Druckbildlänge L + ΔL₁ wird der Printfilm 1 auf der Laminiertrommel 8 im dritten Laminierpunkt mit dem Backing 2 in einer diese Druckbildlänge L + ΔL₁ fixierenden Weise durch Laminieren verbunden. Anschließend findet in den Bereichen ΔL₂ und ΔL₃ regelmäßig immer auch noch eine weitere elastische Längsdehnung des Laminats 3 auf die für das Prägen notwendige Registerlänge statt. Die gesamte Längsdehnung ΔL₃ des Laminats 3 hängt dabei davon ab, ob zu der Längsdehnung ΔL₂ des Laminats 3 bis zum oder nach dem zweiten Festpunkt (Festpunkt 2) noch eine durch eine Relativgeschwindigkeit V_{V4-V3} zwischen der Umfangsgeschwindigkeit V₄ der Prägewalze 7 und der Umfangsgeschwindigkeit V₃ der Gegendruckwalze 5 bewirkte registerlängengesteuerte Längenänderung oder Längenanpassung von prägender Prägebildlänge P_{L} und vorgelegter Druckbildlänge hinzukommt. Die Längsdehnung ΔL₃ und damit auch die Längsdehnung ΔL₂ + V_{V4-V3} sind aber spätestens beim eigentlichen Prägevorgang in der Registerpräge oder Prägestation 6 abgeschlossen. Damit findet bei diesem Ausführungsbeispiel zur Erreichung der für ein registerhaltiges Prägen notwendigen Registerlänge regelmäßig immer mindestens eine weitere Längsdehnung ΔL₂ statt, die im Bereich ΔL₂ als elastische Längsdehnung des Laminats 3 und damit auch des Printfilms 1 ausgebildet ist. Außerdem sind die Längsdehnung ΔL₃ und damit auch die Längsdehnung ΔL₂ + V_{V4-V3} immer größer als 3% der Längsdehnung ΔL₁ und zwar gilt: ΔL₃ > 0,03 ΔL₁. Das heißt, die nach der im ersten Festpunkt (Festpunkt 1) stattfindenden Bildung des Laminats 3 regelmäßig noch erfolgende weitere Längsdehnung ΔL₂ oder ΔL₂ + V_{V4-V3} = ΔL₃ beträgt mindestens 3 % der vorher zwischen dem nullten Festpunkt (Festpunkt 0) und dem ersten Festpunkt (Festpunkt 1) regelmäßig durchgeführten ersten Längsdehnung ΔL₁. Sollte eine Anpassung der auf das vorgelegte Druckbild prägenden Prägelänge des Prägebildes der Prägewalze 7 mittels der Relativgeschwindigkeit V_{V4-V3} im konkreten Einzelfall einmal nicht notwendig werden, erfüllt folglich zumindest die Längsdehnung ΔL₂ der zweiten Stufe die Bedingung, größer 0,03 ΔL₁ zu sein. Bei diesem registerhaltigen Prägeverfahren findet also zwingend regelmäßig immer eine zweistufige Längsdehnung des Printfilms 1 mit einer dem Bereich zwischen dem nullten Festpunkt (Festpunkt 0) und dem ersten Festpunkt (Festpunkt 1) entsprechenden ersten Stufe (ΔL₁) der plastischen Längsdehnung des Printfilms 1 und einer dem Bereich zwischen dem ersten Festpunkt (Festpunkt 1) und dem dritten Festpunkt (Festpunkt 3) entsprechenden zweiten Stufe (ΔL₃ = ΔL₂ + ggf. V_{V4-V3}) der elastischen Längsdehnung des den Printfilm 1 umfassenden Laminats 3 statt.

Mit Hilfe der jeweils das Laminat 3 und/oder den Printfilm 1 kraftbeeinflussend haltenden Festpunkte (Festpunkt 0 bis Festpunkt 3) kann jeweils zwischen zwei benachbarten Festpunkten eine eine Längsdehnung des Printfilms 1 oder des Laminats 3 bewirkende Zugkraft (Warenbahnspannung) auf den Printfilm 1 und/oder das Laminat 3 ausgeübt werden.

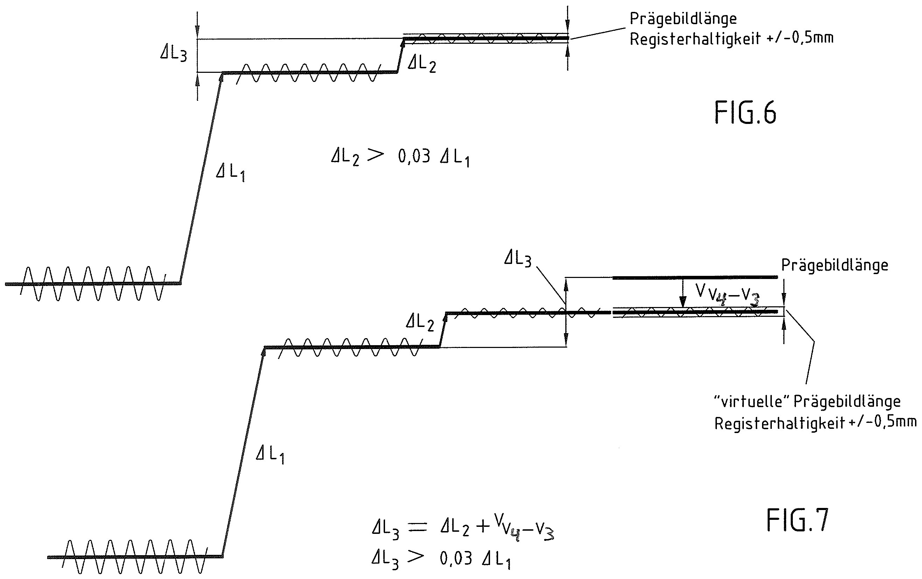

Die in den Schritten ΔL₁, ΔL₂ und ΔL₃ jeweils durchgeführten Längsdehnungen des Printfilms 1 und/oder des dehnbaren Laminats 3 sowie die aufgrund der Anpassung der Umfangsgeschwindigkeit V₄ an die Bahngeschwindigkeit V₃ eventuell zusätzlich vorgenommene Anpassung der Prägebildlänge P_{L} an die vorgelegte Druckbildlänge, sind schematisch und in Bezug auf ihre Verhältnismäßigkeit in den Fig. 6 und 7 dargestellt.

Die Registerhaltigkeit wird als erreicht angesehen, wenn der Prägewalze 7 eine Druckbildlänge vorgelegt wird, die maximal zwischen +/- 0,5 mm von der Prägebildlänge P_{L} abweicht. Die aus anderen Technikbereichen (Druck- und Papierverarbeitungsmaschinen gemäß DE 199 55 822 A; Prägen von Holzwerkstoffplatten gemäß EP 1 500 504 A2) bekannten tolerablen Abweichungen beim registerhaltigen Prägen von 0,1 mm oder +/- 0,15 mm sind für das Folienprägen nicht relevant, da die Printfolien 1 und die Laminate 3 gegenüber Papier und Holzwerkstoffplatten ein deutlich anderes, unterschiedliches Elastitzitätsverhalten aufweisen. Die aus diesen Technikbereichen bekannten engeren Toleranzbereiche können zur Definition der Registerhaltigkeit des Prägevorganges daher keine Berücksichtigung finden. Weiterhin ist bei dieser Ausführungsform des erfindungsgemäßen Verfahrens nach der ersten plastischen Längsdehnung ΔL₁ eine Registerhaltigkeit in diesem Sinne nicht erreicht und ist die immer stattfindende zweite elastische Längsdehnung ΔL₂ oder ΔL₂ + V_{V4-V3} immer größer als 0,03 ΔL₁. Erst durch die immer stattfindende zweite Längsdehnung ΔL₂ bzw. ΔL₃ wird die Registerhaltigkeit eingestellt.

Bei dem dreischichtigen dehnbaren Laminat 3 wird bei diesem Ausführungsbeispiel also nach der erfolgten plastischen Längsdehnung ΔL₁ noch keine Registerhaltigkeit in Bezug auf die Prägewalze 7 erreicht, wobei die Registerhaltigkeit bei einer Abweichung der Druckbildlänge von +/- 0,5 mm von der Prägebildlänge P_{L} als erreicht angesehen wird. Das nach der ersten Längsdehnung ΔL₁ erreichte Längenmaß des Druckbildes des Printfilmes 1 liegt außerhalb üblicher, im Technikgebiet des Prägens von Folien gegebenenfalls noch unter den Begriff "Registerhaltigkeit" oder "in registration" zu subsumierender Toleranzwerte von +/- 0,5 mm. Es gilt L + ΔL₁ ≠ P_{L} +/-0,5 mm, d.h., die sich nach der ersten Längsdehnungsstufe einstellende Längsdehnung des Druckbildes liegt außerhalb der Registerhaltigkeit und zwar außerhalb der Abweichung von - 0,5 mm. Dies bedeutet zugleich, dass weiterhin die Beziehung L + ΔL₁ + >0,03 ΔL₁ + ggf. V_{V4-V3} = P_{L} +/- 0,5 mm oder L + ΔL₁ + ggf. V_{V4-V3} < P_{L} - 0,5 mm - 0,03 ΔL₁ gilt.

Darüber hinaus wird das dehnbare dreischichtige Laminat 3 im Bereich ΔL₂ einer Breitenverminderung unterworfen, da in diesem Bereich der zweiten Längsdehnung ΔL₂ eine Warenbahnspannung auf das Laminat 3 einwirkt, die größer 0 ist.

Die Prägebildlänge P_{L} des auf der Prägewalze 7 eingravierten Prägebildes ist länger als die ursprüngliche Druckbildlänge des Druckbildes des Printfilms 1.

Das dehnbare dreischichtige oder dreilagige Laminat 3 besteht, wie aus Fig. 5 ersichtlich ist, aus dem eine Glasfaservliesschicht 15 umfassenden PVC-Backing 2 als einer Lage oder einer Schicht, das/die eine Schichtdicke von mehr als 2400 µm aufweist, dem darauf laminierten PVC-Printfilm 1, der eine Schichtdicke von mehr als 70 µm aufweist, und dem darauf aufgebrachten Klarfilm 12, der eine Schichtdicke von ca. 500 µm aufweist.

Die Vorrichtung 11, mit welcher das registerhaltige Prägen des Laminats 3 durchgeführt wird, umfasst die vorstehend aufgeführten Elemente sowie darüber hinausgehend notwendige, bekannte Messmittel, die längs der Herstellungslinie des geprägten Laminates 3 von der Zuführung des Klarfilms 12 und des Printfilms 1 bis zur Abführung des geprägten Laminates 3 nach dem Durchlaufen der Prägestation 6 notwendig sind, um Lagen und Geschwindigkeiten der verschiedenen Materialbahnen, insbesondere des Laminates 3, sowie die Geschwindigkeiten der verschiedenen Antriebswalzen oder Antriebsvorrichtungen zu erfassen und zu steuern, damit in üblicher Weise die notwendige Steuerung und Regelung zur Einstellung der gewünschten, mit einer wie vorstehend beschrieben zweistufigen Längsdehnung des Laminates 3 einhergehenden registerhaltigen Prägung des Laminates 3 durchführbar ist. Diese Messmittel umfassen auch auf dem Laminat 3 bzw. dem Printfilm 1 vorhandene Markierungen sowie deren Erfassung und auch Messmittel zur Erfassung der Position und Geschwindigkeit der Prägewalze 7. Weiterhin sind bei der Anlage oder Vorrichtung 11 auch Mittel vorhanden, mit welchen die beabsichtigte plastische Längsdehnung des Films 1 und/oder die elastische Längsdehnung des Laminats 3 bewirkt werden kann. Gegenstand dieser Mittel sind die Festpunkte 0-3, deren jeweiliger Abstand zueinander beispielsweise variierbar ausgebildet sein kann oder an welchen durch Erhöhung der Rotationsgeschwindigkeit einer Walze ein höherer Zug (Warenbahnspannung) in den Film 1 oder das Laminat 3 eingebracht werden kann. Auch diesen Längsdehnungsmitteln sind entsprechende Messeinrichtungen oder Messmittel sowie entsprechende Steuerungs- und/oder Regeleinrichtungen zugeordnet.

## Patentansprüche

1. Verfahren zum kontinuierlichen registerhaltigen Prägen eines mit einem sich wiederholenden Druckbild versehenen dehnbaren Films (1) oder eines mit dem Film (1) gebildeten Laminats (3) in einer eine rotierende und ein Prägebild aufweisende Prägewalze (7) und eine zugeordnete rotierende Gegenwalze (5) umfassenden Prägestation (6), wobei die Druckbildlänge (L + ΔL) des Films (1) oder des Laminats (3) vor dem prägenden Kontakt mit der Prägewalze (7) auf eine Länge größer oder größer gleich oder kleiner oder kleiner gleich der Prägebildlänge (P_{L}) oder des Umfangs der Prägewalze (7) längsgedehnt wird und die Registerhaltigkeit des Prägens durch eine eine, insbesondere gegebenenfalls, bestehende Längendifferenz zwischen dem längsgedehnten Druckbild (L + ΔL) und dem Prägebild der Prägewalze (7) korrigierend ausgleichende Relativgeschwindigkeit (V_{V4-V3}) zwischen der Umfangsgeschwindigkeit (V₄) der Prägewalze (7) und der Bahngeschwindigkeit (V₃) des Films (1) oder des Laminats (3) in der Prägestation (6) erreicht wird, wobei der Film (1) oder das Laminat (3) mit einer zwar regelbaren, aber zum Zeitpunkt des registerhaltigen Prägens konstanten Bahngeschwindigkeit (V₃) durch den zwischen der Gegenwalze (5) und der Prägewalze (7) ausgebildeten Prägebereich bewegt wird.

2. Verfahren nach Anspruch 1, **dadurch gekennzeichnet, dass** der dehnbare Film (1) oder das Laminat (3) während seines Durchlaufs durch die Prägestation (6) zwischen einem in Laufrichtung des Films (1) vor der Prägestation (6) ausgebildeten, den Film (1) oder das Laminat (3) stützend haltenden, ersten Festpunkt (Festpunkt 1) und einem in der Prägestation (6) von und/oder auf der Gegenwalze (5) ausgebildeten zweiten, den Film (1) oder das Laminat (3) stützend haltenden Festpunkt (Festpunkt 2) registerlängengesteuert längsgedehnt (ΔL₂) wird und von dem ersten Festpunkt (Festpunkt 1) über den zweiten Festpunkt (Festpunkt 2) zwischen der Gegenwalze (5) und der Prägewalze (7) hindurch durch die Prägestation (6) mit der zwar regelbaren, aber nach Einstellung der gewünschten Längsdehnung (L + ΔL₁ + ΔL₂) gleichbleibenden oder einen gleichbleibenden Bahnzug bewirkenden Bahngeschwindigkeit (V₃) zu einem dritten, den Film (1) oder das Laminat (3) stützend haltenden Festpunkt (Festpunkt 3) geführt wird, wobei zwischen dem ersten Festpunkt (Festpunkt 1) und dem zweiten Festpunkt (Festpunkt 2) die Druckbildlänge des Films (1) oder Laminats (3) auf eine Länge (L + ΔL₁ + ΔL₂) größer oder größer gleich oder kleiner oder kleiner gleich der Prägebildlänge (P_{L}) oder des Umfangs der Prägewalze (7) längsgedehnt wird und die Registerhaltigkeit des Prägens durch eine eine oder die gegebenenfalls bestehende Längendifferenz zwischen dem längsgedehnten Druckbild des Films (1) oder Laminats (3) und dem Prägebild der Prägewalze (7) korrigierend ausgleichende Umfangsgeschwindigkeit (V₄) der Prägewalze (7) und der dadurch bestimmten Relativgeschwindigkeit (V_{V4-V3}) zwischen der Umfangsgeschwindigkeit (V₄) der Prägewalze (7) und der Bahngeschwindigkeit (V₃) erreicht wird.

3. Verfahren nach Anspruch 1 oder 2, **dadurch gekennzeichnet, dass** bei einer an einem zweiten Festpunkt, insbesondere dem zweiten Festpunkt (Festpunkt 2), oder im Bereich eines zweiten Festpunktes, insbesondere des zweiten Festpunktes (Festpunkt 2), bestehenden Längendifferenz zwischen dem längsgedehnten Druckbild des Films (1) oder Laminats (3) und dem Prägebild der Prägewalze (7) die Registerhaltigkeit des Prägens durch eine die jeweils bestehende Längendifferenz zwischen dem längsgedehntem Druckbild und dem Prägebild der Prägewalze (7) korrigierend ausgleichende Ein- und/oder Verstellung der Umfangsgeschwindigkeit (V₄) der Prägewalze (7) und der dadurch bestimmten Relativgeschwindigkeit (V_{V4-V3}) zwischen der Umfangsgeschwindigkeit (V₄) der Prägewalze (7) und der Bahngeschwindigkeit (V₃) des Films (1) oder Laminats (3) erreicht wird.

4. Verfahren nach einem der vorhergehenden Ansprüche, **dadurch gekennzeichnet, dass** die Umfangsgeschwindigkeit (V₃) der Gegenwalze (5) konstant gehalten wird.

5. Verfahren nach einem der Ansprüche 1 bis 3, **dadurch gekennzeichnet, dass** bei einer an einem zweiten Festpunkt, insbesondere dem zweiten Festpunkt (Festpunkt 2), oder im Bereich eines zweiten Festpunktes, insbesondere des zweiten Festpunktes (Festpunkt 2), bestehenden Längendifferenz zwischen dem längsgedehnten Druckbild des Films (1) oder Laminats (3) und dem Prägebild der Prägewalze (7) die Registerhaltigkeit des Prägens durch eine die jeweils bestehende Längendifferenz zwischen dem längsgedehnten Druckbild des Films (1) oder Laminats (3) und dem Prägebild der Prägewalze (7) korrigierend ausgleichende Kombination einer Umfangsgeschwindigkeitsveränderung sowohl der Umfangsgeschwindigkeit (V₃) der Gegenwalze (5) als auch der Umfangsgeschwindigkeit (V₄) der Prägewalze (7) unter Einstellung der gewünschten ausgleichenden Relativgeschwindigkeit zwischen der Umfangsgeschwindigkeit (V₄) der Prägewalze (7) und der Bahngeschwindigkeit (V₃) des Films (1) oder Laminats (3) erreicht wird.

6. Verfahren nach einem der vorhergehenden Ansprüche, **dadurch gekennzeichnet, dass** bei einer an einem zweiten Festpunkt, insbesondere dem zweiten Festpunkt (Festpunkt 2), oder im Bereich eines zweiten Festpunktes, insbesondere des zweiten Festpunktes (Festpunkt 2), bestehenden Längendifferenz zwischen dem längsgedehnten Druckbild des Films (1) oder Laminats (3) und dem Prägebild der Prägewalze (7) die Registerhaltigkeit des Prägens durch eine die jeweils bestehende Längendifferenz zwischen dem längsgedehnten Druckbild des Films (1) oder Laminats (3) und dem Prägebild der Prägewalze (7) korrigierend ausgleichende Ein- und/oder Verstellung der Umfangsgeschwindigkeit (V₄) der Prägewalze (7) und der dadurch bestimmten Relativgeschwindigkeit zwischen der Umfangsgeschwindigkeit (V₄) der Prägewalze (7) und der Bahngeschwindigkeit (V₃) des Films (1) oder Laminats (3) erreicht wird, wobei ein Verhältnis der Umfangsgeschwindigkeit (V₄) der Prägewalze (7) zur Umfangsgeschwindigkeit (V₃) der Gegenwalze (5) eingestellt wird, das gleich dem Verhältnis der Prägebildlänge der Prägewalze (7) zur Länge des längsgedehnten Druckbildes des Films (1) oder des Laminats (3) an diesem zweiten Festpunkt oder im Bereich dieses zweiten Festpunktes ist.

7. Verfahren nach einem der vorhergehenden Ansprüche, **dadurch gekennzeichnet, dass** das Druckbild des Films (1) oder des Laminats (3) mit einer Maßabweichung des längsgedehnten Druckbildes von der Prägebildlänge der Prägewalze (7) von bis zu 50 mm, vorzugsweise bis zu 10 mm, insbesondere bis zu 3-5 mm, ganz besonders bevorzugt bis zu 1 mm, größer oder kleiner als die Prägebildlänge der Prägewalze (7) zwischen einem erstem Festpunkt, insbesondere dem ersten Festpunkt (Festpunkt 1), und einem zweiten Festpunkt, insbesondere dem zweiten Festpunkt (Festpunkt 2), längsgedehnt wird.

8. Verfahren nach einem der vorhergehenden Ansprüche, **dadurch gekennzeichnet, dass** das Druckbild des Films (1) oder des Laminats (3) mit einer Maßabweichung des längsgedehnten Druckbildes von der Prägebildlänge der Prägewalze (7) von 0,1 - 20 %, vorzugsweise von 0,5 - 15 %, insbesondere von 1 - 3 %, größer oder kleiner als die Prägebildlänge der Prägewalze (7) zwischen einem ersten Festpunkt, insbesondere dem ersten Festpunkt (Festpunkt 1), und einem zweiten Festpunkt, insbesondere dem zweiten Festpunkt (Festpunkt 2), längsgedehnt wird.

9. Verfahren nach einem der vorhergehenden Ansprüche, **dadurch gekennzeichnet, dass** der Film (1) oder das Laminat (2) zwischen einem ersten Festpunkt, insbesondere dem ersten Festpunkt, und einem zweiten Festpunkt, insbesondere dem zweiten Festpunkt, insbesondere auf eine Temperatur erwärmt wird, die eine plastische Verformung des Films (1) oder des Laminats (3) ermöglicht.

10. Verfahren nach einem der vorhergehenden Ansprüche, **dadurch gekennzeichnet, dass** der Film (1) oder das Laminat (3) zwischen einem ersten Festpunkt, insbesondere dem ersten Festpunkt (Festpunkt 1), und einem zweiten Festpunkt, insbesondere dem zweiten Festpunkt (Festpunkt 2), plastisch und/oder elastisch längsgedehnt wird.

11. Verfahren nach einem der vorhergehenden Ansprüche, **dadurch gekennzeichnet, dass** der Film (1) oder das Laminat (3) zwischen einem ersten Festpunkt, insbesondere dem ersten Festpunkt (Festpunkt 1), und einem zweiten Festpunkt, insbesondere dem zweiten Festpunkt (Festpunkt 2), auf eine konstante Druckbildlänge längsgedehnt wird.

12. Verfahren nach einem der vorhergehenden Ansprüche, **dadurch gekennzeichnet, dass** der Film (1) oder das Laminat (3) zwischen einem ersten Festpunkt, insbesondere dem ersten Festpunkt (Festpunkt 1), und einem zweiten Festpunkt, insbesondere dem zweiten Festpunkt (Festpunkt 2), auf eine von der Prägebildlänge oder dem Umfang der Prägewalze (7) abweichende längsgedehnte Druckbildlänge längsgedehnt wird.

13. Verfahren nach einem der vorhergehenden Ansprüche, **dadurch gekennzeichnet, dass** die Ein- und/oder Verstellung oder Änderung und Anpassung der korrigierend ausgleichenden Relativgeschwindigkeit der Umfangsgeschwindigkeit (V₄) der Prägewalze (7) zur Bahngeschwindigkeit (V₃) des Films (1) oder des Laminats (3) während des kontinuierlichen Prägeprozesses ohne Änderung des Anpressdrucks von Gegenwalze (5) und Prägewalze (7) und ohne ein Anheben oder Abheben von Gegenwalze (5) und Prägewalze (7) durchgeführt wird.

14. Verfahren nach einem der Ansprüche 2-13, **dadurch gekennzeichnet, dass** am ersten, zweiten und dritten Festpunkt (Festpunkt 1, Festpunkt 2, Festpunkt 3) eine der Umfangsgeschwindigkeit (V₃) der Gegenwalze (5) entsprechende Bahngeschwindigkeit (V₃) eingestellt wird und die Prägewalze (7) mit einer davon abweichenden größeren oder kleineren Umfangsgeschwindigkeit (V₄) unter Einstellung der korrigierend ausgleichenden Relativgeschwindigkeit zwischen Prägewalzenumfangsgeschwindigkeit (V₄) und Bahngeschwindigkeit (V₃) eingestellt wird.

15. Verfahren nach einem der vorhergehenden Ansprüche, **dadurch gekennzeichnet, dass** zwischen einem ersten Festpunkt, insbesondere dem ersten (Festpunkt 1), und einem zweiten Festpunkt, insbesondere dem zweiten Festpunkt (Festpunkt 2), eine konstante längsgedehnte Druckbildlänge des Druckbildes des Films (1) oder Laminats (3) eingestellt wird und die Registerhaltigkeit des Prägens durch eine eine oder die jeweils bestehende Längendifferenz zwischen dem längsgedehnten Druckbild des Films (1) oder Laminats (3) und dem Prägebild der Prägewalze (7) korrigierend ausgleichende Anpassung der registerhaltig prägenden Prägelänge des Prägebildes der Prägewalze (7) mittels variabler Anpassung der Umfangsgeschwindigkeit (V₄) der Prägewalze (7) an die eingestellte längsgedehnte Druckbildlänge und damit der korrigierend ausgleichenden Relativgeschwindigkeit zwischen der Umfangsgeschwindigkeit (V₄) der Prägewalze (7) und Bahngeschwindigkeit (V₃) des Films (1) oder Laminats (3) in der Prägestation (6) erreicht wird.

16. Verfahren nach Anspruch 15, **dadurch gekennzeichnet, dass** eine konstante längsgedehnte (L + ΔL₁ + ΔL₂) Druckbildlänge eingestellt wird, die größer oder kleiner als die Prägebildlänge (P_{L}) ist.

17. Verfahren nach einem der vorhergehenden Ansprüche, **dadurch gekennzeichnet, dass** der Film (1) einem ersten Festpunkt, insbesondere dem ersten Festpunkt (Festpunkt 1), mit einer zwischen diesem ersten Festpunkt und einem diesem vorgelagerten nullten, den Film stützend haltenden Festpunkt (Festpunkt 0) eingestellten Vordehnung (L + ΔL₁) des Druckbildes des Films (1) in Längsrichtung und der Druckbildlänge des Films (1) zugeführt und an diesem ersten Festpunkt oder im Bereich dieses ersten Festpunktes zur Bildung des Laminats (3) auf einen das vorgedehnte Druckbild des Films (1) stabilisierenden Träger (2) auflaminiert wird.

18. Verfahren nach einem der vorhergehenden Ansprüche, **dadurch gekennzeichnet, dass** an einem ersten Festpunkt, insbesondere am ersten Festpunkt (Festpunkt 1), das Laminat (3) gebildet und bis zu einem zweiten Festpunkt, insbesondere dem zweiten Festpunkt (Festpunkt 2), vorzugsweise elastisch, auf die jeweils eingestellte oder gewünschte Druckbildlänge (L + ΔL₁ + ΔL₂) des Films (1) oder Laminats (3) längsgedehnt wird.

19. Verfahren nach einem der vorhergehenden Ansprüche, **dadurch gekennzeichnet, dass** der Film (1) und dessen Druckbildlänge zwischen einem nullten Festpunkt, insbesondere dem nullten Festpunkt (Festpunkt 0), und einem ersten Festpunkt, insbesondere dem ersten Festpunkt (Festpunkt 1), auf eine, insbesondere konstante, Druckbildlänge, vorzugsweise plastisch, längsgedehnt (L + ΔL₁) werden,
an dem ersten Festpunkt oder im Bereich des ersten Festpunktes (Festpunkt 1) der derart längsgedehnte Film (1) unter Bildung des Laminats (3) auf einen/den das längsgedehnte Druckbild stabilisierenden Träger (2) auflaminiert wird und zwischen dem ersten Festpunkt (Festpunkt 1) und einem dritten Festpunkt, insbesondere dem dritten Festpunkt (Festpunkt 3) (ΔL₃), die Druckbildlänge des derart erhaltenen Laminats (3) und die prägende Prägelänge des Prägebildes der Prägewalze (7) durch eine, vorzugsweise elastische, korrigierende Längsdehnung (ΔL₂) des Laminats (3) zwischen dem ersten Festpunkt (Festpunkt 1) und einem zweiten Festpunkt, insbesondere dem zweiten Festpunkt (Festpunkt 2), und/oder durch die korrigierend ausgleichende Relativgeschwindigkeitseinstellung (V_{V4-V3}) zwischen der Umfangsgeschwindigkeit (V4) der Prägewalze (7) und der Bahngeschwindigkeit (V3) des Laminats (3) aneinander angepasst werden, wobei diese korrigierende Längenanpassung >3 %, insbesondere >20%, vorzugsweise >50%, der Korrekturgröße (ΔL₁) der zwischen dem nullten Festpunkt (Festpunkt 0) und dem ersten Festpunkt (Festpunkt 1) eingestellten Druckbildlänge (L + ΔL₁) beträgt.

20. Verfahren nach einem der vorhergehenden Ansprüche, **dadurch gekennzeichnet, dass** das Druckbild des Films (1) oder Laminats (3) bis zu einem zweiten Festpunkt, insbesondere zum zweiten Festpunkt (Festpunkt 2), auf eine konstante Druckbildlänge (L + ΔL₁ + ΔL₂) längsgedehnt wird, die kleiner oder größer als die Prägebildlänge (P_{L}) der Prägewalze (7) ist, und dass die prägende Prägelänge der Prägewalze (7) mittels einer die an die längsgedehnte (L + ΔL₁ + ΔL₂) Druckbildlänge angepasste korrigierend ausgleichende Relativgeschwindigkeit (V_{V4-V3}) der Prägewalze (7) zur Bahngeschwindigkeit (V₃) des Films (1) oder Laminats (3) erzeugenden Umfangsgeschwindigkeit (V₄) der Prägewalze (7) auf die längsgedehnte (L + ΔL₁ + AL₂) Druckbildlänge des Films (1) oder Laminats (3) abgestimmt wird, wobei das Verhältnis von Umfangsgeschwindigkeit (V₄) der Prägewalze (7) zur Umfangsgeschwindigkeit (V₃) der Gegenwalze (5) konstant gleich dem Verhältnis von der Prägebildlänge (P_{L}) auf der Prägewalze (7) zur längsgedehnten (L + ΔL₁ + AL₂) Druckbildlänge des Films (1) oder Laminats (3) an dem zweiten Festpunkt oder im Bereich des zweiten Festpunktes eingestellt wird.

## Claims

1. A method for the continuous in-register embossing of a stretchable film (1) which is provided with a repeating printed image or a laminate (3) which is formed by way of the film (1) in an embossing station (6) which comprises a rotating embossing roll (7) which has an embossed image and an associated rotating counter-roll (5), the printed image length (L + ΔL) of the film (1) or the laminate (3) being stretched longitudinally before the embossing contact with the embossing roll (7) to a length which is greater than or greater than or equal to or smaller than or smaller than or equal to the embossed image length (P_{L}) or the circumference of the embossing roll (7), and the maintenance of register of the embossing being achieved by way of a relative speed (V_{V4-V3}) between the circumferential speed (V₄) of the embossing roll (7) and the web speed (V₃) of the film (1) or the laminate (3) in the embossing station (6), which relative speed (V_{V4-V3}) compensates in a correcting manner for an in particular, possibly existing length difference between the longitudinally stretched printed image (L + ΔL) and the embossed image of the embossing roll (7), the film (1) or the laminate (3) being moved through the embossing region which is formed between the counter-roll (5) and the embossing roll (7) at a web speed (V₃) which, although it can be regulated, is constant at the time of the in-register embossing.

2. The method as claimed in claim 1, **characterized in that**, during its passage through the embossing station (6) between a first fixed point (fixed point 1) which is formed upstream of the embossing station (6) in the running direction of the film (1) and holds the film (1) or the laminate (3) in a supporting manner and a second fixed point (fixed point 2) which is formed by and/or on the counter-roll (5) in the embossing station (6) and holds the film (1) or the laminate (3) in a supporting manner, the stretchable film (1) or the laminate (3) is longitudinally stretched (ΔL₂) such that the register length is controlled, and is guided from the first fixed point (fixed point 1) via the second fixed point (fixed point 2) between the counter-roll (5) and the embossing roll (7) through the embossing station (6), at the web speed (V₃) which, although it can be regulated, remains constant or brings about a constant web tension after the desired longitudinal stretching (L + ΔL₁ + ΔL₂) is set, to a third fixed point (fixed point 3) which holds the film (1) or the laminate (3) in a supporting manner, the printed image length of the film (1) or laminate (3) being longitudinally stretched between the first fixed point (fixed point 1) and the second fixed point (fixed point 2) to a length (L + ΔL₁ + ΔL₂) which is greater than or greater than or equal to or smaller than or smaller than or equal to the embossed image length (P_{L}) or the circumference of the embossing roll (7), and the maintenance of register of the embossing being achieved by way of a circumferential speed (V₄) of the embossing roll (7) and the relative speed (V_{V4-V3}) determined as a result between the circumferential speed (V₄) of the embossing roll (7) and the web speed (V₃), which circumferential speed (V₄) compensates in a correcting manner for a length difference or the possibly existing length difference between the longitudinally stretched printed image of the film (1) or laminate (3) and the embossed image of the embossing roll (7).

3. The method as claimed in claim 1 or 2, **characterized in that**, in the case of a length difference between the longitudinally stretched printed image of the film (1) or laminate (3) and the embossed image of the embossing roll (7), which length difference exists at a second fixed point, in particular the second fixed point (fixed point 2), or in the region of a second fixed point, in particular the second fixed point (fixed point 2), the maintenance of register of the embossing is achieved by way of a setting and/or adjustment of the circumferential speed (V₄) of the embossing roll (7) and the relative speed (V_{V4-V3}) determined as a result between the circumferential speed (V₄) of the embossing roll (7) and the web speed (V₃) of the film (1) or laminate (3), which setting and/or adjustment compensates in a correcting manner for the respectively existing length difference between the longitudinally stretched printed image and the embossed image of the embossing roll (7).

4. The method as claimed in one of the preceding claims, **characterized in that** the circumferential speed (V₃) of the counter-roll (5) is kept constant.

5. The method as claimed in one of claims 1 to 3, **characterized in that**, in the case of a length difference between the longitudinally stretched printed image of the film (1) or laminate (3) and the embossed image of the embossing roll (7), which length difference exists at a second fixed point, in particular the second fixed point (fixed point 2), or in the region of a second fixed point, in particular the second fixed point (fixed point 2), the maintenance of register of the embossing is achieved by way of a combination of a circumferential speed change both of the circumferential speed (V₃) of the counter-roll (5) and of the circumferential speed (V₄) of the embossing roll (7) with setting of the desired compensating relative speed between the circumferential speed (V₄) of the embossing roll (7) and the web speed (V₃) of the film (1) or laminate (3), which combination compensates in a correcting manner for the respectively existing length difference between the longitudinally stretched printed image of the film (1) or laminate (3) and the embossed image of the embossing roll (7) .

6. The method as claimed in one of the preceding claims, **characterized in that**, in the case of a length difference between the longitudinally stretched printed image of the film (1) or laminate (3) and the embossed image of the embossing roll (7), which length difference exists at a second fixed point, in particular the second fixed point (fixed point 2), or in the region of a second fixed point, in particular the second fixed point (fixed point 2), the maintenance of register of the embossing is achieved by way of a setting and/or adjustment of the circumferential speed (V₄) of the embossing roll (7) and the relative speed determined as a result between the circumferential speed (V₄) of the embossing roll (7) and the web speed (V₃) of the film (1) or laminate (3), which setting and/or adjustment compensates in a correcting manner for the respectively existing length difference between the longitudinally stretched printed image of the film (1) or laminate (3) and the embossed image of the embossing roll (7), a ratio of the circumferential speed (V₄) of the embossing roll (7) to the circumferential speed (V₃) of the counter-roll (5) being set, which ratio is equal to the ratio of the embossed image length of the embossing roll (7) to the length of the longitudinally stretched printed image of the film (1) or the laminate (3) at said second fixed point or in the region of said second fixed point.

7. The method as claimed in one of the preceding claims, **characterized in that** the printed image of the film (1) or the laminate (3) is longitudinally stretched with a dimensional deviation of the longitudinally stretched printed image from the embossed image length of the embossing roll (7) of up to 50 mm, preferably up to 10 mm, in particular up to 3-5 mm, very particularly preferably up to 1 mm, greater than or less than the embossed image length of the embossing roll (7) between a first fixed point, in particular the first fixed point (fixed point 1), and a second fixed point, in particular the second fixed point (fixed point 2).

8. The method as claimed in one of the preceding claims, **characterized in that** the printed image of the film (1) or the laminate (3) is longitudinally stretched with a dimensional deviation of the longitudinally stretched printed image from the embossed image length of the embossing roll (7) of 0.1-20%, preferably of 0.5-15%, in particular of 1-3%, greater than or smaller than the embossed image length of the embossing roll (7) between a first fixed point, in particular the first fixed point (fixed point 1), and a second fixed point, in particular the second fixed point (fixed point 2).

9. The method as claimed in one of the preceding claims, **characterized in that** the film (1) or the laminate (2) is heated between a first fixed point, in particular the first fixed point, and a second fixed point, in particular the second fixed point, in particular to a temperature which makes a plastic deformation of the film (1) or the laminate (3) possible.

10. The method as claimed in one of the preceding claims, **characterized in that** the film (1) or the laminate (3) is longitudinally stretched plastically and/or elastically between a first fixed point, in particular the first fixed point (fixed point 1), and a second fixed point, in particular the second fixed point (fixed point 2).

11. The method as claimed in one of the preceding claims, **characterized in that** the film (1) or the laminate (3) is longitudinally stretched to a constant printed image length between a first fixed point, in particular the first fixed point (fixed point 1), and a second fixed point, in particular the second fixed point (fixed point 2).

12. The method as claimed in one of the preceding claims, **characterized in that** the film (1) or the laminate (3) is longitudinally stretched between a first fixed point, in particular the first fixed point (fixed point 1), and a second fixed point, in particular the second fixed point (fixed point 2), to a longitudinally stretched printed image length which differs from the embossed image length or the circumference of the embossing roll (7).

13. The method as claimed in one of the preceding claims, **characterized in that** the setting and/or adjustment or change and adaptation of the relative speed, which compensates in a correcting manner, of the circumferential speed (V₄) of the embossing roll (7) to the web speed (V₃) of the film (1) or the laminate (3) is carried out during the continuous embossing process without a change in the contact pressure of the counter-roll (5) and the embossing roll (7) and without the counter-roll (5) and the embossing roll (7) being thrown on or thrown off.

14. The method as claimed in one of claims 2-13, **characterized in that** a web speed (V₃) which corresponds to the circumferential speed (V₃) of the counter-roll (5) is set at the first, second and third fixed point (fixed point 1, fixed point 2, fixed point 3), and the embossing roll (7) is set at a greater or smaller circumferential speed (V₄) which differs from said circumferential speed (V₃), with setting of the relative speed, which compensates in a correcting manner, between the embossing roll circumferential speed (V₄) and the web speed (V₃) .

15. The method as claimed in one of the preceding claims, **characterized in that** a constant longitudinally stretched printed image length of the printed image of the film (1) or laminate (3) is set between a first fixed point, in particular the first fixed point (fixed point 1), and a second fixed point, in particular the second fixed point (fixed point 2), and the maintenance of register of the embossing is achieved by way of an adaptation of the embossing length, which embosses in register, of the embossed image of the embossing roll (7), which adaptation compensates in a correcting manner for a or the respectively existing length difference between the longitudinally stretched printed image of the film (1) or laminate (3) and the embossed image of the embossing roll (7), by means of variable adaptation of the circumferential speed (V₄) of the embossing roll (7) to the set longitudinally stretched printed image length and therefore the relative speed, which compensates in a correcting manner, between the circumferential speed (V₄) of the embossing roll (7) and the web speed (V₃) of the film (1) or laminate (3) in the embossing station (6).

16. The method as claimed in claim 15, **characterized in that** a constant longitudinally stretched (L + ΔL₁ + ΔL₂) printed image length is set which is greater than or smaller than the embossed image length (P_{L}).

17. The method as claimed in one of the preceding claims, **characterized in that** the film (1) is fed to a first fixed point, in particular the first fixed point (fixed point 1), with a pre-stretch (L + ΔL₁) of the printed image of the film (1) in the longitudinal direction and the printed image length of the film (1), which pre-stretch is set between said first fixed point and a zeroth fixed point (fixed point 0) which is positioned upstream of said first fixed point and holds the film in a supporting manner, and said film (1) is laminated onto a carrier (2) which stabilizes the prestretched printed image of the film (1) at said first fixed point or in the region of said first fixed point in order to form the laminate (3).

18. The method as claimed in one of the preceding claims, **characterized in that** the laminate (3) is formed at a first fixed point, in particular at the first fixed point (fixed point 1), and is longitudinally stretched, preferably elastically, as far as a second fixed point, in particular the second fixed point (fixed point 2), to the respectively set or desired printed image length (L + ΔL₁ + ΔL₂) of the film (1) or laminate (3).

19. The method as claimed in one of the preceding claims, **characterized in that** the film (1) and its printed image length are longitudinally stretched (L + ΔL₁), preferably plastically, between a zeroth fixed point, in particular the zeroth fixed point (fixed point 0), and a first fixed point, in particular the first fixed point (fixed point 1), to a printed image length which is, in particular, constant,
the film (1) which is longitudinally stretched in this way is laminated onto a/the carrier (2) which stabilizes the longitudinally stretched printed image with the formation of the laminate (3) at the first fixed point or in the region of the first fixed point (fixed point 1), and, between the first fixed point (fixed point 1) and a third fixed point, in particular the third fixed point (fixed point 3) (ΔL₃), the printed image length of the laminate (3) which is obtained in this way and the embossing embossed length of the embossed image of the embossing roll (7) are adapted to one another by way of, preferably elastic, correcting longitudinal stretching (ΔL₂) of the laminate (3) between the first fixed point (fixed point 1) and a second fixed point, in particular the second fixed point (fixed point 2), and/or by way of the relative speed setting (V_{V4}-_{V3}), which compensates in a correcting manner, between the circumferential speed (V₄) of the embossing roll (7) and the web speed (V₃) of the laminate (3), wherein said correcting length adaptation is > 3%, in particular > 20%, preferably > 50%, of the correction variable (ΔL₁) of the printed image length (L + ΔL₁) which is set between the zeroth fixed point (fixed point 0) and the first fixed point (fixed point 1).

20. The method as claimed in one of the preceding claims, **characterized in that** the printed image of the film (1) or laminate (3) is longitudinally stretched as far as a second fixed point, in particular to the second fixed point (fixed point 2), to a constant printed image length (L + ΔL₁ + ΔL₂) which is smaller than or greater than the embossed image length (P_{L}) of the embossing roll (7), and **in that** the embossing embossed length of the embossing roll (7) is adapted to the longitudinally stretched (L + ΔL₁ + ΔL₂) printed image length of the film (1) or laminate (3) by means of a circumferential speed (V₄) of the embossing roll (7) which generates the relative speed (V_{V4-V3}), which compensates in a correcting manner and is adapted to the longitudinally stretched (L + ΔL₁ + ΔL₂) printed image length, of the embossing roll (7) to the web speed (V₃) of the film (1) or laminate (3), the ratio of the circumferential speed (V₄) of the embossing roll (7) to the circumferential speed (V₃) of the counter-roll (5) being set to be constantly equal to the ratio of the embossed image length (P_{L}) on the embossing roll (7) to the longitudinally stretched (L + ΔL₁ + ΔL₂) printed image length of the film (1) or laminate (3) at the second fixed point or in the region of the second fixed point.

## Revendications

1. Procédé pour le gaufrage en continu et en registre d'un film étirable (1) qui est pourvu d'une image imprimée répétitive ou d'un stratifié (3) qui est formé au moyen du film (1) dans une station de gaufrage (6) qui comprend un rouleau de gaufrage rotatif (7) qui a une image gaufrée et un contre-rouleau rotatif associé (5), la longueur de l'image imprimée (L + ΔL) du film (1) ou du stratifié (3) étant étirée longitudinalement avant le contact de gaufrage avec le rouleau de gaufrage (7) à une longueur qui est supérieure ou supérieure ou égale ou inférieure ou inférieure ou égale à la longueur de l'image gaufrée (P_{L}) ou la circonférence du rouleau de gaufrage (7), et le repérage du gaufrage étant obtenu au moyen d'une vitesse relative (V_{V4-V3}) entre la vitesse circonférentielle (V₄) du rouleau de gaufrage (7) et la vitesse de bande (V₃) du film (1) ou du stratifié (3) dans la station de gaufrage (6), laquelle vitesse relative (V_{V4-V3}) compensant de manière corrective une différence de longueur en particulier éventuellement existante entre l'image imprimée étirée longitudinalement (L + ΔL) et l'image gaufrée du rouleau de gaufrage (7), le film (1) ou le stratifié (3) étant déplacé à travers la zone de gaufrage qui est formée entre le contre-rouleau (5) et le rouleau de gaufrage (7) à une vitesse de bande (V₃) qui, bien que réglable, est constante au moment du gaufrage en registre.

2. Procédé selon la revendication 1, **caractérisé en ce que**, lors de son passage à travers la station de gaufrage (6), entre un premier point fixe (point fixe 1) formé en amont de la station de gaufrage (6) dans le sens de défilement du film (1) et maintenant le film (1) ou le stratifié (3) en appui et un deuxième point fixe (point fixe 2) formé par et/ou sur le contre-rouleau (5) dans la station de gaufrage (6) et maintenant le film (1) ou le stratifié (3) en appui, le film étirable (1) ou le stratifié (3) est étiré longitudinalement (ΔL₂) de manière à ce que la longueur du registre soit contrôlée, et est guidé du premier point fixe (point fixe 1) via le deuxième point fixe (point fixe 2) entre le contre-rouleau (5) et le rouleau de gaufrage (7) à travers la station de gaufrage (6), à la vitesse de bande (V₃) qui, bien que réglable, reste constante ou provoque une tension de bande constante après que l'étirement longitudinal souhaité (L + ΔL1 + ΔL2) a été réglé, à un troisième point fixe (point fixe 3) qui maintient le film (1) ou le stratifié (3) en appui, la longueur de l'image imprimée du film (1) ou du stratifié (3) étant étirée longitudinalement entre le premier point fixe (point fixe 1) et le deuxième point fixe (point fixe 2) à une longueur (L + ΔL1 + ΔL2) qui est supérieure ou supérieure ou égale ou inférieure ou inférieure ou égale à la longueur de l'image gaufrée (P_{L}) ou la circonférence du rouleau de gaufrage (7), et le repérage du gaufrage étant obtenu au moyen d'une vitesse circonférentielle (V₄) du rouleau de gaufrage (7) et de la vitesse relative (V_{V4-V3}) déterminée comme résultat entre la vitesse circonférentielle (V₄) du rouleau de gaufrage (7) et la vitesse de bande (V₃), laquelle vitesse circonférentielle (V₄) compensant de manière corrective une différence de longueur ou la différence de longueur éventuellement existante entre l'image imprimée étirée longitudinalement du film (1) ou du stratifié (3) et l'image gaufrée du rouleau de gaufrage (7).

3. Procédé selon la revendication 1 ou 2, **caractérisé en ce que**, dans le cas d'une différence de longueur entre l'image imprimée étirée longitudinalement du film (1) ou du stratifié (3) et l'image gaufrée du rouleau de gaufrage (7), laquelle différence de longueur existant en un deuxième point fixe, en particulier le deuxième point fixe (point fixe 2), ou dans la zone d'un deuxième point fixe, en particulier le deuxième point fixe (point fixe 2), le repérage du gaufrage est obtenu au moyen d'un réglage et/ou un ajustement de la vitesse circonférentielle (V₄) du rouleau de gaufrage (7) et de la vitesse relative (V_{V4-V3}) déterminée comme résultat entre la vitesse circonférentielle (V₄) du rouleau de gaufrage (7) et la vitesse de bande (V₃) du film (1) ou du stratifié (3), lequel réglage et/ou ajustement compensant de manière corrective la différence de longueur respectivement existante entre l'image imprimée étirée longitudinalement et l'image gaufrée du rouleau de gaufrage (7).

4. Procédé selon l'une quelconque des revendications précédentes, **caractérisé en ce que** la vitesse circonférentielle (V₃) du contre-rouleau (5) est maintenue constante.

5. Procédé selon l'une quelconque des revendications 1 à 3, **caractérisé en ce que**, dans le cas d'une différence de longueur entre l'image imprimée étirée longitudinalement du film (1) ou du stratifié (3) et l'image gaufrée du rouleau de gaufrage (7), laquelle différence de longueur existant à un deuxième point fixe, en particulier le deuxième point fixe (point fixe 2), ou dans la région d'un deuxième point fixe, en particulier le deuxième point fixe (point fixe 2), le repérage du gaufrage est obtenu au moyen d'une combinaison d'une modification de la vitesse circonférentielle à la fois de la vitesse circonférentielle (V₃) du contre-rouleau (5) et de la vitesse circonférentielle (V₄) du rouleau de gaufrage (7) avec réglage de la vitesse relative de compensation souhaitée entre la vitesse circonférentielle (V₄) du rouleau de gaufrage (7) et la vitesse de bande (V₃) du film (1) ou du stratifié (3), laquelle combinaison compensant de manière corrective la différence de longueur respectivement existante entre l'image imprimée étirée longitudinalement du film (1) ou du stratifié (3) et l'image gaufrée du rouleau de gaufrage (7) .

6. Procédé selon l'une quelconque des revendications précédentes, **caractérisé en ce que**, dans le cas d'une différence de longueur entre l'image imprimée étirée longitudinalement du film (1) ou du stratifié (3) et l'image gaufrée du rouleau de gaufrage (7), laquelle différence de longueur existant à un deuxième point fixe, en particulier le deuxième point fixe (point fixe 2), ou dans la région d'un deuxième point fixe, en particulier le deuxième point fixe (point fixe 2), le repérage du gaufrage est obtenu par un réglage et/ou un ajustement de la vitesse circonférentielle (V₄) du rouleau de gaufrage (7) et de la vitesse relative déterminée en conséquence entre la vitesse circonférentielle (V₄) du rouleau de gaufrage (7) et la vitesse de bande (V₃) du film (1) ou du stratifié (3), lequel réglage et/ou ajustement compensant de manière corrective la différence de longueur respectivement existante entre l'image imprimée étirée longitudinalement du film (1) ou du stratifié (3) et l'image gaufrée du rouleau de gaufrage (7), un rapport de la vitesse circonférentielle (V₄) du rouleau de gaufrage (7) à la vitesse circonférentielle (V₃) du contre-rouleau (5) étant réglé, lequel rapport étant égal au rapport de la longueur de l'image gaufrée du rouleau de gaufrage (7) à la longueur de l'image imprimée étirée longitudinalement du film (1) ou du stratifié (3) au niveau dudit deuxième point fixe ou dans la région dudit deuxième point fixe.

7. Procédé selon l'une quelconque des revendications précédentes, **caractérisé en ce que** l'image imprimée du film (1) ou du stratifié (3) est étirée longitudinalement avec une déviation dimensionnelle de l'image imprimée étirée longitudinalement par rapport à la longueur de l'image gaufrée du rouleau de gaufrage (7) de 50 mm au maximum, de préférence de 10 mm au maximum, en particulier jusqu'à 3-5 mm, très particulièrement de préférence jusqu'à 1 mm, supérieure ou inférieure à la longueur de l'image gaufrée du rouleau de gaufrage (7) entre un premier point fixe, en particulier le premier point fixe (point fixe 1), et un deuxième point fixe, en particulier le deuxième point fixe (point fixe 2).

8. Procédé selon l'une quelconque des revendications précédentes, **caractérisé en ce que** l'image imprimée du film (1) ou du stratifié (3) est étirée longitudinalement avec une déviation dimensionnelle de l'image imprimée étirée longitudinalement par rapport à la longueur de l'image gaufrée du rouleau de gaufrage (7) de 0,1-20%, de préférence de 0,5-15%, en particulier de 1-3%, supérieure ou inférieure à la longueur de l'image gaufrée du rouleau de gaufrage (7) entre un premier point fixe, en particulier le premier point fixe (point fixe 1), et un deuxième point fixe, en particulier le deuxième point fixe (point fixe 2).

9. Procédé selon l'une quelconque des revendications précédentes, **caractérisé en ce que** le film (1) ou le stratifié (2) est chauffé entre un premier point fixe, en particulier le premier point fixe, et un deuxième point fixe, en particulier le deuxième point fixe, en particulier à une température qui permet une déformation plastique du film (1) ou du stratifié (3).

10. Procédé selon l'une quelconque des revendications précédentes, **caractérisé en ce que** le film (1) ou le stratifié (3) est étiré longitudinalement de manière plastique et/ou élastique entre un premier point fixe, en particulier le premier point fixe (point fixe 1), et un deuxième point fixe, en particulier le deuxième point fixe (point fixe 2).

11. Procédé selon l'une quelconque des revendications précédentes, **caractérisé en ce que** le film (1) ou le stratifié (3) est étiré longitudinalement à une longueur de l'image imprimée constante entre un premier point fixe, en particulier le premier point fixe (point fixe 1), et un deuxième point fixe, en particulier le deuxième point fixe (point fixe 2).

12. Procédé selon l'une quelconque des revendications précédentes, **caractérisé en ce que** le film (1) ou le stratifié (3) est étiré longitudinalement entre un premier point fixe, en particulier le premier point fixe (point fixe 1), et un deuxième point fixe, en particulier le deuxième point fixe (point fixe 2), à une longueur de l'image imprimée étirée longitudinalement qui diffère de la longueur de l'image gaufrée ou de la circonférence du rouleau de gaufrage (7) .

13. Procédé selon l'une quelconque des revendications précédentes, **caractérisé en ce que** le réglage et/ou l'ajustement ou la modification et l'adaptation de la vitesse relative, qui compense de manière corrective, de la vitesse circonférentielle (V₄) du rouleau de gaufrage (7) à la vitesse de bande (V₃) du film (1) ou du stratifié (3) est effectué pendant le processus de gaufrage en continu sans modification de la pression de contact du contre-rouleau (5) et du rouleau de gaufrage (7) et sans que le contre-rouleau (5) et le rouleau de gaufrage (7) soient mis en place ou enlevés.

14. Procédé selon l'une quelconque des revendications 2 à 13, **caractérisé en ce qu'**une vitesse de bande (V₃) qui correspond à la vitesse circonférentielle (V₃) du contre-rouleau (5) est réglée au premier, deuxième et troisième points fixes (point fixe 1, point fixe 2, point fixe 3), et le rouleau de gaufrage (7) est réglé à une vitesse circonférentielle (V₄) supérieure ou inférieure, qui diffère de ladite vitesse circonférentielle (V₃), avec réglage de la vitesse relative, qui compense de manière corrective, entre la vitesse circonférentielle du rouleau de gaufrage (V₄) et la vitesse de bande (V₃).

15. Procédé selon l'une quelconque des revendications précédentes, **caractérisé en ce qu'**une longueur de l'image imprimée étirée longitudinalement constante de l'image imprimée du film (1) ou du stratifié (3) est réglée entre un premier point fixe, en particulier le premier point fixe (point fixe 1), et un deuxième point fixe, en particulier le deuxième point fixe (point fixe 2), et le repérage du gaufrage est obtenu par une adaptation de la longueur de gaufrage, qui gaufre en repérage, de l'image gaufrée du rouleau de gaufrage (7), laquelle adaptation compensant de manière corrective une ou la différence de longueur respectivement existante entre l'image imprimée étirée longitudinalement du film (1) ou du stratifié (3) et l'image gaufrée du rouleau de gaufrage (7), par une adaptation variable de la vitesse circonférentielle (V₄) du rouleau de gaufrage (7) à la longueur de l'image imprimée étirée longitudinalement réglée et donc de la vitesse relative, qui compense de manière corrective, entre la vitesse circonférentielle (V₄) du rouleau de gaufrage (7) et la vitesse de bande (V₃) du film (1) ou du stratifié (3) dans la station de gaufrage (6).

16. Procédé selon la revendication 15, **caractérisé en ce que** l'on règle une longueur de l'image imprimée étirée longitudinalement constante (L + ΔL₁ + ΔL₂) qui est supérieure ou inférieure à la longueur de l'image gaufrée (P_{L}) .

17. Procédé selon l'une quelconque des revendications précédentes, **caractérisé en ce que** le film (1) est amené à un premier point fixe, en particulier le premier point fixe (point fixe 1), avec un pré-étirage (L + ΔL₁) de l'image imprimée du film (1) dans la direction longitudinale et la longueur de l'image imprimée du film (1), lequel pré-étirage étant réglé entre ledit premier point fixe et un point fixe zéro (point fixe 0) positionné en amont de celui-ci et le maintenant en appui, et ledit film (1) est stratifié sur un support (2) stabilisant l'image imprimée pré-étirée du film (1) au niveau dudit premier point fixe ou dans la région dudit premier point fixe afin de former le stratifié (3).

18. Procédé selon l'une quelconque des revendications précédentes, **caractérisé en ce que** le stratifié (3) est formé à un premier point fixe, en particulier au premier point fixe (point fixe 1), et est étiré longitudinalement, de préférence élastiquement, jusqu'à un deuxième point fixe, en particulier le deuxième point fixe (point fixe 2), à la longueur de l'image imprimée respectivement réglée ou souhaitée (L + ΔL₁ + AL₂) du film (1) ou du stratifié (3).

19. Procédé selon l'une quelconque des revendications précédentes, **caractérisé en ce que** le film (1) et sa longueur de l'image imprimée sont étirés longitudinalement (L + ΔL₁), de préférence plastiquement, entre un point fixe zéro, en particulier le point fixe zéro (point fixe 0), et un premier point fixe, en particulier le premier point fixe (point fixe 1), à une longueur de l'image imprimée qui est, en particulier, constante,
le film (1) ainsi étiré longitudinalement est stratifié sur un/le support (2) stabilisant l'image imprimée étirée longitudinalement avec la formation du stratifié (3) au premier point fixe ou dans la région du premier point fixe (point fixe 1), et, entre le premier point fixe (point fixe 1) et un troisième point fixe, en particulier le troisième point fixe (point fixe 3) (ΔL₃), la longueur de l'image imprimée du stratifié (3) ainsi obtenu et la longueur de l'image gaufrée du rouleau de gaufrage (7) sont adaptées l'une à l'autre par le biais d'un étirement longitudinal (ΔL₂) de préférence élastique, qui corrige, du stratifié (3), entre le premier point fixe (point fixe 1) et un deuxième point fixe, en particulier le deuxième point fixe (point fixe 2), et/ou par le biais du réglage de la vitesse relative (V_{V4-V3}), qui compense de manière corrective, entre la vitesse circonférentielle (V4) du rouleau de gaufrage (7) et la vitesse de bande (V3) du stratifié (3), où ladite adaptation de longueur qui corrige est > 3 %, en particulier > 20 %, de préférence > 50 %, de la variable de correction (ΔL₁) de la longueur de l'image imprimée (L + ΔL₁) réglée entre le point fixe zéro (point fixe 0) et le premier point fixe (point fixe 1) .

20. Procédé selon l'une quelconque des revendications précédentes, **caractérisé en ce que** l'image imprimée du film (1) ou du stratifié (3) est étirée longitudinalement jusqu'à un deuxième point fixe, en particulier jusqu'au deuxième point fixe (point fixe 2), à une longueur de l'image imprimée constante (L + ΔL₁ + ΔL₂) qui est inférieure ou supérieure à la longueur de l'image gaufrée (P_{L}) du rouleau de gaufrage (7), et **en ce que** la longueur de gaufrage du rouleau de gaufrage (7) est adaptée à la longueur de l'image imprimée (L + ΔL₁ + ΔL₂) du film (1) ou du stratifié (3) étirée longitudinalement au moyen d'une vitesse circonférentielle (V₄) du rouleau de gaufrage (7) qui génère la vitesse relative (V_{V4-V3}), qui compense de manière corrective et est adaptée à la longueur de l'image imprimée étirée longitudinalement (L + ΔL₁ + ΔL₂), du rouleau de gaufrage (7) à la vitesse de bande (V₃) du film (1) ou du stratifié (3), le rapport de la vitesse circonférentielle (V₄) du rouleau de gaufrage (7) à la vitesse circonférentielle (V₃) du contre-rouleau (5) étant réglé pour être constamment égal au rapport de la longueur de l'image gaufrée (P_{L}) sur le rouleau de gaufrage (7) à la longueur de l'image imprimée (L + ΔL₁ + ΔL₂) étirée longitudinalement du film (1) ou du stratifié (3) au deuxième point fixe ou dans la région du deuxième point fixe.
